# EUROPÄISCHE PATENTANMELDUNG

(11) **EP 4 810 369 A1**
(43) Veröffentlichungstag der Anmeldung: **23.09.2026**
(21) Anmeldenummer: 26164518.8
(22) Anmeldetag: 13.03.2026
(51) Int. Cl.: B64C 15/12, B64C 29/00, B64C 39/00, B64C 5/08, B64C 9/18, B64C 25/34, B64D 27/355, B64D 27/357, B64D 37/04, B64D 37/30

(54) **FLUGGERÄT**

(30) Priorität: 18.03.2025 DE 102025110382
(71) Anmelder: Burggraf, Alfred, 82278 Althegnenberg (DE)
(72) Erfinder: Burggraf, Alfred, 82278 Althegnenberg (DE)
(74) Vertreter: Müller, Thomas

(57) **Zusammenfassung**

Die vorliegende Erfindung betrifft ein bemanntes Fluggerät (10) zum Transport von Personen und/oder Lasten. Um den Bau eines herkömmlichen Fluggeräts weiter zu vereinfachen, weist das Fluggerät (10) ein Nutzlastmodul (20) und ein Antriebsmodul (30) auf, wobei das Nutzlastmodul (20) und das Antriebsmodul (30) als voneinander getrennte Module bereitgestellt sind, welche, insbesondere lösbar, zum Fluggerät (10) zusammengesetzt sind. Das Nutzlastmodul (20) und das Antriebsmodul (30) sind über eine Antriebseinrichtung (41) rotationsbeweglich (40) relativ zueinander angeordnet, wobei insbesondere das Nutzlastmodul (20) stationär ist und das Antriebsmodul (30) um das Nutzlastmodul (20) rotierbar ist. Das Antriebsmodul (30) weist wenigstens eine, vorzugsweise zwei oder mehr erste Triebwerkeinrichtung(en) (50) auf, das/die zur Erzeugung einer Vorwärtsbewegung (51) und/oder einer Schrägflugbewegung konfiguriert ist/sind. Weiterhin weist das Antriebsmodul (30) wenigstens eine, vorzugsweise zwei oder mehr zweite Triebwerkeinrichtung(en) (60) auf, das/die zur Erzeugung einer senkrechten Aufwärtsbewegung und/oder einer senkrechten Abwärtsbewegung konfiguriert ist/sind.

## Beschreibung

Die vorliegende Erfindung betrifft zunächst ein Fluggerät zum Transport von Personen und/oder Lasten. Bei dem Fluggerät handelt es sich insbesondere um ein bemanntes Fluggerät. Weiterhin betrifft die Erfindung auch ein Verfahren zum Fliegen eines solchen Fluggeräts.

Heute bekannte Fluggeräte beziehungsweise Flugzeuge sind der Anatomie eines Vogels nachempfunden. Sie bestehen aus einem langgestreckten Rumpf, dessen Länge um ein Vielfaches größer ist als dessen Breite, zumindest einem, in der Regel zwei Tragflächen, und einem Heckbereich. Das Cockpit befindet sich im vorderen Bereich des Rumpfs. Der Rumpf beherbergt, je nach Einsatzgebiet des Fluggeräts, eine Fluggastkabine und/oder einen Frachtraum. Die Flugbewegungen werden durch Triebwerke und durch das Leitwerk, bestehend aus Höhenruder, Seitenruder und Querruder durchgeführt.

Beim Bau solcher Fluggeräte werden viele unterschiedliche Struktur- und Beplankungsteile benötigt. Das ist aufwändig in der Konstruktion und Herstellung und damit kostenintensiv. Zudem bestehen Probleme in der Logistik, da die Fluggeräte üblicherweise nicht an einem einzigen Ort hergestellt werden. Vielmehr werden einzelne Komponenten des Fluggeräts an verschiedenen Orten hergestellt und anschließend zu einem Montageort transportiert, wo das Fluggerät endmontiert wird. Probleme bereitet weiterhin der mitgeführte Treibstoff. Die Unterbringung der Treibstofftanks erfolgt üblicherweise in den Tragflächen und im Rumpfbereich zwischen den Tragflächen. Das heißt, es sind komplizierte und umfangreiche Steuerungsmaßnahmen erforderlich, damit das Fluggerät während des Flugs, bei dem Treibstoff aus den Treibstofftanks entnommen wird, stets im Gleichgewicht bleibt. **In** Summe besteht bei den bekannten Fluggeräten ein großer Platzbedarf für die zur Handhabung erforderlichen Komponenten, bei vergleichsweise wenig Platz für Passagiere und/oder Fracht.

Wie vorstehend beschriebene Fluggeräte sehen seit vielen Jahrzehnen mehr oder weniger gleich aus. In der jüngeren Vergangenheit geht man jedoch dazu über, von den bisherigen Konstruktionen abzuweichen und im Hinblick auf neue Konstruktionsmöglichkeiten für Fluggeräte zu experimentieren.

In der US 2014/0319274 A1 beispielsweise ist ein bemanntes Fluggerät offenbart, bei dem die Größe und Form einer Fluggastkabine verändert wird. Bei dieser bekannten Lösung erstreckt sich die Struktur, die die Fluggastkabine begrenzt, um 360 Grad um einen außerhalb der Struktur definierten Raum herum. Diese Struktur wird als widerstandsfähiger gegen Belastungen, die durch die Druckbeaufschlagung der Kabine entstehen, beschrieben.

In der US 9,193,460 B2 wird ein Fluggerät beschrieben, welches modulartig aufgebaut ist. Bei einem Modul handelt es sich um ein Nutzlastmodul, beispielsweise eine Fluggastkabine. Ein anderes Modul ist das Antriebsmodul, welches die erforderlichen Komponenten zum Handhaben des Fluggeräts beherbergt. Beide Module sind als voneinander trennbare Module bereitgestellt, die zum Fluggerät zusammengesetzt werden. Es werden Verfahren zum Transfer einer Nutzlast wie Passagiere und/oder Gepäck und/oder Fracht zwischen einem Flughafen und einer Kabine eines Fluggeräts beschrieben. Es wird ein Fluggerät bereitgestellt, das ein abnehmbares Kabinenmodul umfasst. Ein Andockmodul ist ebenfalls vorgesehen, um das abnehmbare Kabinenmodul zwischen dem Fluggerät, sprich dem Antriebsmodul, und einem Flughafen zu transferieren.

Alles in allem sehen auch diese Fluggeräte grundsätzlich immer noch so aus wie eh und je, mit den weiter oben geschilderten Nachteilen.

In der Vergangenheit sind bereits auch Fluggeräte bekannt geworden, die eine von der bekannten Bauform abweichende Ausgestaltung haben. In der CN112124592, von der die vorliegende Erfindung ausgeht, ist ein Fluggerät zum Transport von Personen beschrieben. Das Fluggerät umfasst zwei Module. Ein erstes Modul ist ein scheibenförmiges Modul, das die Antriebseinheit und die Energieversorgung enthält. Ein zweites Modul wird durch ein Cockpit gebildet. Über einen Motor kann das Cockpit in Bezug zu dem scheibenförmigen Modul gedreht werden. Aufgrund des scheibenförmigen Aufbaus ist das Fluggerät rotationssymmetrisch aufgebaut. Ein hierzu ähnliches rotationssymmetrisches Fluggerät ist auch in der US 3,465,989 B beschrieben.

Der vorliegenden Erfindung liegt die Aufgabe zugrunde, den Bau eines herkömmlichen Fluggeräts derart weiter zu vereinfachen, dass die eingangs geschilderten Nachteile vermieden werden können.

Diese Aufgabe wird erfindungsgemäß gelöst durch das Fluggerät mit den Merkmalen des unabhängigen Patentanspruchs 1, welches den ersten Aspekt der Erfindung darstellt, sowie durch das Verfahren zum Fliegen eines Fluggeräts mit den Merkmalen des unabhängigen Patentanspruchs 14, welches den zweiten Aspekt der Erfindung darstellt.

Weitere Merkmale und Details der Erfindung ergeben sich aus den Unteransprüchen, aus der Beschreibung sowie aus den Zeichnungen. Dabei gelten Merkmale und Details, die im Zusammenhang mit einem der Erfindungsaspekte offenbart sind, vollumfänglich auch im Zusammenhang mit jeweils allen anderen Erfindungsaspekten, und umgekehrt, so dass hinsichtlich der Offenbarung der einzelnen Erfindungsaspekte stets vollinhaltlich auch Bezug auf die jeweils anderen Erfindungsaspekte genommen wird. Insbesondere ergibt sich der Ablauf des erfindungsgemäßen Verfahrens auch aus der Funktionsbeschreibung sowie der Beschreibung des Zusammenwirkens der einzelnen Komponenten des erfindungsgemäßen Fluggeräts, so dass hinsichtlich des Ablaufs und der Durchführung des erfindungsgemäßen Verfahrens zur Vermeidung von Wiederholungen auch auf die Ausführungen zu dem erfindungsgemäßen Fluggerät vollinhaltlich Bezug genommen und verwiesen wird.

Ein Grundgedanke der vorliegenden Erfindung besteht darin, dass bei dem Fluggerät aufgrund von dessen konstruktiver Ausgestaltung die erforderlichen Strukturteile und die Beplankungsteile nunmehr überwiegend identisch sind, die zudem einfach zu fertigen sind. Für diese Bauteile benötigt man nurje ein Werkzeug und/oder eine Herstellungsvorrichtung. Dadurch wird das Fluggerät erheblich kostengünstiger.

Die vorliegende Erfindung ist grundsätzlich nicht auf bestimmte Materialien beschränkt, aus denen die einzelnen strukturellen Bauteile des Fluggeräts hergestellt sind. Gemäß einer Ausführungsform bestehen diese oder zumindest einzelne strukturelle Bauteile aus Kohlenstofffasermaterialien oder weisen Kohlenstofffasermaterialien auf. Derartige Materialien sind zum einen leicht, weisen aber gleichzeitig eine ausreichend hohe Festigkeit, Steifigkeit und Widerstandsfähigkeit auf. Natürlich können die Bauteile auch aus anderen Materialien hergestellt sein, beispielsweise aus Metall, etwa Aluminium.

Bei dem Fluggerät der Erfindung handelt es sich insbesondere um ein bemanntes Fluggerät. Das heißt, das Fluggerät ist mit einer oder mehreren Personen besetzt. Das Fluggerät ist insbesondere für die bemannte Luftfahrt bereitgestellt.

Auf die bislang erforderliche Bereitstellung eines Leitwerks kann verzichtet werden. Vielmehr werden die erforderlichen Flugbewegungen, wie weiter unten in Detail erläutert wird, durch die besondere Ausgestaltung des Fluggeräts und/oder durch besonders ausgebildete Triebwerkeinrichtungen übernommen.

Das Fluggerät der vorliegenden Erfindung weist zunächst ein Nutzlastmodul auf. Ein "Modul" ist dabei ein, insbesondere austauschbares, Element innerhalb eines Gesamtsystems. Das Gesamtsystem ist hier das Fluggerät. Das Nutzlastmodul beherbergt die während eines Flugs des Fluggeräts transportierte Nutzlast. Die Nutzlast ist diejenige Last, die das Fluggerät maximal aufnehmen kann beziehungsweise darf. Die Erfindung ist nicht auf bestimmte Arten von Nutzlasten beschränkt. Beispielsweise handelt es sich bei der Nutzlast um Flugpassagiere, Fluggepäck, Luftfracht, oder dergleichen. Die genannten Nutzlasten können jeweils einzeln für sich vom Fluggerät transportiert werden, oder aber in beliebigen Kombinationen. Gemäß einer Ausführungsform weist das Nutzlastmodul eine Fluggastkabine und/oder einen Frachtraum auf.

Das Fluggerät weist weiterhin ein Antriebsmodul auf. Das Antriebsmodul beherbergt insbesondere sämtliche Komponenten und Systeme, die zum Handhaben des Fluggeräts erforderlich sind. Hierzu werden im Folgenden einige Beispiele beschrieben.

Zur Verbesserung der Aerodynamik weist das Antriebsmodul gemäß einer Ausführungsform in Flugrichtung einen spitz zulaufenden Frontbereich oder Nase auf. Weiterhin weist das Antriebsmodul gemäß einer Ausführungsform ein Cockpit auf.

Gemäß einer Ausführungsform ist im Antriebsmodul ein Energieerzeugungssystem bereitgestellt. Ein "System" ist insbesondere ein aus mehreren Bestandteilen zusammengesetztes Ganzes, dessen Struktur, sei es konstruktiv und/oder funktional, aus verschiedenen Komponenten besteht. Die Komponenten haben unterschiedliche Eigenschaften und Funktionen, stehen jedoch in einer definierten Beziehung zueinander, so dass sie als Ganzes betrachtet werden können und sich von anderen Systemen abgrenzen lassen.

Das "Energieerzeugungssystem" umfasst insbesondere diejenigen Komponenten, die zur Bereitstellung der Energie für die Handhabung des Fluggeräts benötigt werden. Das umfasst insbesondere Komponenten zur Energieerzeugung, zur Lagerung von Energie, zur Verteilung von Energie, und dergleichen, sowie Komponenten zu deren Steuerung und Betätigung. Solche Komponenten umfassen insbesondere sowohl Hardwarekomponenten als auch Softwarekomponenten.

Gemäß einer Ausführungsform weist das Energieerzeugungssystem wenigstens eine Energiequelle auf. Eine "Energiequelle" ist insbesondere ein Körper, in dem Energie gespeichert ist, die nach außen abgegeben wird. Die Erfindung ist nicht auf bestimmte Arten von Energiequellen beschränkt. Je nach Typ des Fluggeräts kann es sich bei einer solchen Energiequelle beispielsweise um einen Tank handeln, in dem der erforderliche Kraftstoff, beispielsweise Kerosin, Wasserstoff, oder dergleichen, gespeichert ist. Gemäß einer bevorzugten Ausführungsform handelt es sich bei der Energiequelle um einen Tank zur Aufnahme von Wasserstoff. In einem solchen Fall wird das Fluggerät bevorzugt mit Wasserstoff betrieben. Der Wasserstoff kann beispielsweise genutzt werden, um damit direkt Triebwerkeinrichtungen zu betreiben. Der Wasserstoff kann auch dazu genutzt werden, dass er in andere Energieformen, beispielsweise in elektrische Energie, umgewandelt wird.

Bei der Energiequelle kann es sich beispielsweise auch um eine Batterieeinrichtung handeln.

Gemäß einer Ausführungsform weist das Energieerzeugungssystem eine Brennstoffzelleneinrichtung auf, die dann mit Wasserstoff versorgt wird, um elektrische Energie zu erzeugen.

Die genannten Beispiele dienen nur zur exemplarischen Verdeutlichung, so dass die Erfindung nicht auf die genannten Beispiele beschränkt ist. Wird das Fluggerät beispielsweise mit Wasserstoff oder elektrischem Strom betrieben, entstehen keine schädlichen Schadstoffemissionen.

Gemäß einer Ausführungsform ist die wenigstens eine Energiequelle im Schwerpunkt oder um den Schwerpunkt herum des Antriebsmoduls bereitgestellt. Gemäß einer anderen Ausführungsform ist die Energiequelle im Bereich der Mittelachse des Fluggeräts, oder aber um die Mittelachse herum bereitgestellt. Die Mittelachse kann auch die Mittelachse des Antriebsmoduls sein. "Bereitgestellt" bedeutet hier insbesondere, dass die Energiequelle dort angeordnet oder ausgebildet ist. Die Mittelachse erstreckt sich insbesondere durch den Mittelpunkt des Fluggeräts und/oder des Antriebsmoduls. Bei der Mittelachse handelt es sich gemäß einer Ausführungsform um eine Symmetrieachse, wie im weiteren Verlauf der Beschreibung noch erläutert wird. Wird als Energiequelle ein Kraftstoff verwendet, wird dadurch zu jeder Zeit eine optimale Gewichtsverteilung des Kraftstoffs erreicht, insbesondere durch symmetrische Platzierung eines Tanks oder natürlich auch einer Batterieeinrichtung, beispielsweise am Boden des Fluggeräts.

Gemäß einer Ausführungsform weist das Energieerzeugungssystem eine einzige Energiequelle, beispielsweise in Form eines Tanks, auf. Gemäß einer anderen Ausführungsform weist das Energieerzeugungssystem zwei oder mehr Energiequellen, beispielsweise in Form von Tanks, auf. Diese Energiequellen können beispielsweise gleich groß oder unterschiedlich groß ausgebildet sein. Diese Energiequellen können beispielsweise ringförmig oder ringsegmentförmig ausgebildet und um den Schwerpunkt oder die Mittelachse herum, beispielsweise nebeneinander liegend, im Fluggerät, etwa im Antriebsmodul, angeordnet sein. Die Energiequellen können aber auch hintereinander, oder nebeneinander bereitgestellt sein. Die Erfindung ist weder auf eine bestimmte Anzahl von Energiequellen, noch auf eine bestimmte Form von Energiequellen, noch auf eine bestimmte Größe und ein bestimmtes Fassungsvermögen der Energiequellen beschränkt.

Gemäß einer Ausführungsform ist an oder in dem Antriebsmodul auch eine Antriebseinheit bereitgestellt, das heißt angeordnet oder ausgebildet. Die Antriebseinheit umfasst insbesondere solche Komponenten, wie beispielsweise Triebwerkeinrichtungen und Komponenten zur Steuerung, Bedienung und Handhabung der Triebwerkeinrichtungen, die für den Antrieb und die Flugrichtung des Fluggeräts benötigt werden. An und in dem Antriebsmodul können des Weiteren auch Komponenten zur Steuerung, Bedienung und Handhabung des Fluggeräts bereitgestellt, insbesondere angeordnet und/oder ausgebildet, sein.

Das Nutzlastmodul und das Antriebsmodul sind als voneinander getrennte Module bereitgestellt. Das bedeutet, das Antriebsmodul, welches die Antriebseinheit und das Energieerzeugungssystem des Fluggeräts beinhaltet, und das Nutzlastmodul, beispielsweise ein Fahrgast/Frachtraum, sind voneinander getrennt. Gemäß einer Ausführungsform sind das Nutzlastmodul und das Antriebsmodul durch ein Bodenelement voneinander getrennt.

Das Bodenelement kann beispielsweise ein Bestandteil des Antriebsmoduls oder ein Bestandteil des Nutzlastmoduls sein. Es ist bei einigen Ausgestaltungsvarianten auch denkbar, dass das Bodenelement ein eigenständiges Bauteil ist, an dem dann das Nutzlastmodul und das Antriebsmodul angeordnet werden/sind. Das Nutzlastmodul und das Antriebsmodul werden, insbesondere lösbar, zum Fluggerät zusammengesetzt. Das hat eine Reihe von Vorteilen. Das Nutzlastmodul und das Antriebsmodul können beispielsweise an unterschiedlichen Orten gefertigt werden. Das Antriebsmodul könnte beispielsweise zum Nutzlastmodul fliegen, und dort erfolgt die Montage. Auch ist es möglich, dass das Nutzlastmodul für unterschiedliche Einsatzzwecke individuell ausgetauscht werden kann. So können beispielsweise bei einem Flug Passagiere befördert werden. Dann ist das Nutzlastmodul als Flugastkabine ausgebildet oder weist eine solche auf. Bei einem anderen Flug ist es beispielsweise gewünscht, Frachten zu transportieren. Dann wird das Nutzlastmodul ausgetauscht, das dann als Frachtraum ausgebildet ist oder einen solchen aufweist.

Das Antriebsmodul und/oder das Bodenelement stellt gemäß einer Ausführungsform eine Art Bodenplattform dar. Eine solche Bodenplattform stellt insbesondere die technische Basis für den Aufbau des Fluggeräts bereit. Das Fluggerät hat somit insbesondere eine große, stabile Bodenplattform. Gemäß einer Ausführungsform handelt es sich bei der Bodenplattform um ein Bauteil, das sich im montierten Zustand des Fluggeräts im Verbund mit dem Nutzlastmodul und dem Antriebsmodul befindet. Gemäß einer anderen Ausführungsform handelt es sich bei der Bodenplattform um das Antriebsmodul selbst, welches sich im Verbund mit dem Nutzlastmodul befindet. Gemäß einer Ausführungsform sind die Konstruktionselemente, beispielsweise die Spanten, der Rumpfstruktur des Fluggeräts mit der Bodenplattform verbunden, beispielsweise, wenn es sich bei der Bodenplattform um das Bodenelement handelt. Wenn es sich bei der Bodenplattform um das Antriebsmodul handelt, sind die Konstruktionselemente beispielsweise Bestandteile der Bodenplattform. Insbesondere dann, wenn das Antriebsmodul und das Fluggerät rotationssymmetrisch ausgebildet sind, sind die Konstruktionselemente, beispielsweise die Spanten, zumindest größtenteils gleich oder ähnlich ausgebildet. Das macht deren Herstellung und damit auch den Zusammenbau des Fluggeräts wesentlich einfacher und damit kostengünstiger als bei den Herstellungsverfahren herkömmlicher Fluggeräte.

Insgesamt können durch die erfindungsgemäße Ausgestaltung des Fluggeräts beispielsweise mehr Sitzplätze, mehr Stauraum, mehr Platz für die Energieversorgung, etwa Batterien, Kerosin oder Wasserstoff, bereitgestellt werden, wodurch sich auch eine höhere Reichweite erzielen lässt.

Gemäß dem ersten Aspekt der Erfindung wird ein Fluggerät bereitgestellt, welches die Merkmale des unabhängigen Patentanspruchs 1 aufweist.

Das Fluggerät, welches zum Transport von Personen und/oder Lasten dient, weist wie vorstehend beschrieben ein Nutzlastmodul und ein Antriebsmodul auf, wobei das Nutzlastmodul und das Antriebsmodul als voneinander getrennte Module bereitgestellt sind, welche, insbesondere lösbar, zum Fluggerät zusammengesetzt sind.

Erfindungsgemäß ist weiterhin realisiert, dass das Nutzlastmodul und das Antriebsmodul rotationsbeweglich relativ zueinander angeordnet sind. "Rotationsbeweglich" heißt dabei insbesondere, dass das Nutzlastmodul und das Antriebsmodul zumindest zeitweilig relativ zueinander eine Rotationsbewegung oder Drehbewegung oder Kreisbewegung ausführen. Diese Bewegung erfolgt um eine Rotationsachse beziehungsweise Drehachse. Die Rotationsachse kann, muss aber nicht, durch einen Massenmittelpunkt des Nutzlastmoduls beziehungsweise Antriebsmoduls gehen. Eine solche relative Bewegung liegt beispielsweise vor, wenn das Nutzlastmodul starr ist und sich das Antriebsmodul bewegt. Sie liegt aber auch vor, wenn das Antriebsmodul starr ist und sich das Nutzlastmodul bewegt. Sie liegt natürlich auch dann vor, wenn sich sowohl das Nutzlastmodul als auch das Antriebsmodul bewegen. Die Rotationsbewegung wird insbesondere durchgeführt, um das Fluggerät in eine gewünschte Flugrichtung zu lenken, und insbesondere so weit, bis eine gewünschte Flugrichtung erreicht ist.

Gemäß einer Ausführungsform ist das Fluggerät rotationssymmetrisch ausgebildet. "Rotationssymmetrisch" bedeutet insbesondere, dass das Fluggerät um eine zentrale Achse, hier die bereits erwähnte Mittelachse, ausgebildet ist und insbesondere gedreht werden kann, und dabei seine Form unverändert bleibt. Gemäß einer Ausführungsform hat das Fluggerät eine kreisförmige Ausgestaltung. In einem solchen Fall ist das Fluggerät insbesondere in Form einer Scheibe ausgebildet. Gemäß einer Ausführungsform sind sowohl das Nutzlastmodul als auch das Antriebsmodul in einer solchen Weise rotationssymmetrisch ausgebildet. Eine solche Ausgestaltung hat insbesondere auch den Vorteil, dass es bei dem Fluggerät viele identische Bauteile gibt, was den Konstruktions- und Herstellungsaufwand reduziert. Gemäß einer anderen Ausführungsform hat das Fluggerät, insbesondere das Antriebsmodul, eine tropfenförmige Ausgestaltung. Das Fluggerät, insbesondere das Antriebsmodul, kann aber auch anders ausgestaltet sein, beispielsweise in Form einer Kugel.

Das Fluggerät zeichnet sich insbesondere dadurch aus, dass das Nutzlastmodul stationär ist, während das Antriebsmodul um das Nutzlastmodul rotierbar ist. Das bedeutet, dass im bestimmungsgemäßen Gebrauch des Fluggeräts das Antriebsmodul zumindest bereichsweise, vorzugsweise um bis zu 360 Grad, um das Nutzlastmodul rotiert werden kann. Durch die Rotation des Antriebsmoduls wird die Flugrichtung des Fluggeräts eingestellt. Das heißt, in Relation zu einer Rotationsbewegung des Antriebsmoduls wird die Flugrichtung des Fluggeräts eingestellt und verändert. Dabei kann das Nutzlastmodul, beispielsweise der Fluggast/Frachtraum stationär bleiben, und das Antriebsmodul mit dem Energieerzeugungssystem rotiert axial um das Nutzlastmodul. Ein Vorteil bei dieser Ausführungsform ist, dass die Energieversorgung und die Triebwerkeinrichtungen zueinander stationär sind. Die Triebwerke können problemlos mit Energie versorgt werden.

Damit das Nutzlastmodul und das Antriebsmodul relativ zueinander rotiert werden können, weist das Fluggerät zur Erzeugung einer Rotationsbewegung zwischen dem Nutzlastmodul und dem Antriebsmodul eine Antriebseinrichtung auf. Die vorliegende Erfindung ist nicht auf bestimmte Typen von Antriebseinrichtungen beschränkt. Die Antriebseinrichtung muss lediglich in der Lage sein, dass damit das Antriebsmodul um das Nutzlastmodul eine Rotationsbewegung ausführen kann. Die Antriebseinrichtung ist gemäß einer Ausführungsform eine Getriebeeinrichtung. Eine solche Antriebseinrichtung kann auf unterschiedliche Weise ausgebildet sein. Handelt es sich um eine Getriebeeinrichtung, weist diese beispielsweise einen Innenzahnring, etwa in Form eines Hohlrads, auf, der sich an dem oder im Antriebsmodul befindet. Am Nutzlastmodul befindet sich dann ein Zahnrad, das mit einem Antrieb, beispielsweise einem Elektromotor, betrieben werden kann, und das mit dem Innenzahnring kämmt. Der Elektromotor ist am/im Nutzlastmodul, beispielsweise einem Bodenelement, etwa einer Bodenplatte, befestigt und wird beispielsweise von einem Lagerbock arretiert, der ebenfalls am/im Nutzlastmodul befestigt wird. Gemäß einer anderen Ausführungsform kann die Antriebseinrichtung über geeignete Treibwerkeinrichtungen realisiert sein, beispielsweise, wenn die Treibwerkeinrichtungen in ihrer Ausrichtung verändert, beispielsweise verdreht oder gekippt werden können.

Gemäß einer Ausführungsform ist zwischen dem Antriebsmodul und dem Nutzlastmodul wenigstens eine Lagereinrichtung bereitgestellt. Diese dient insbesondere dazu, die relative Rotationsbewegung zwischen dem Nutzlastmodul und dem Antriebsmodul zu vereinfachen, und um die Reibung während der Drehbewegung zu reduzieren. Die Erfindung ist weder auf eine bestimmte Anzahl, noch auf bestimmte Typen von Lagereinrichtungen beschränkt. Insbesondere ist die Lagereinrichtung ausgewählt aus der Gruppe bestehend aus Rollenlager, Luftlager, Magnetlager, oder Lager zur Verringerung der Reibung zwischen Nutzlastmodul und Antriebsmodul.

Gemäß einer Ausführungsform weist das Antriebsmodul eine untere Begrenzungsfläche, eine obere Begrenzungsfläche und einen das Antriebsmodul seitlich begrenzenden Peripheriebereich auf. Die Begrenzungsflächen und der Peripheriebereich bilden eine Art Gehäuse, an und/oder in dem die einzelnen Komponenten des Antriebsmoduls angeordnet oder ausgebildet sind. Das "Anordnen" bedeutet im Lichte der Erfindung insbesondere, dass die Komponente zunächst als eigenständiges Bauteil vorliegt, welches anschließend an dem Antriebsmodul befestigt wird. Das "Ausbilden" bedeutet im Lichte der Erfindung insbesondere, dass die Komponente einen integralen Bestandteil des Antriebsmoduls bilde, das heißt mit diesem einstückig ist oder in diesem fest eingebaut ist.

Eine untere Begrenzungsfläche ist dabei insbesondere diejenige Fläche, die dem Boden oder Untergrund, auf dem das Fluggerät steht oder über den das Fluggerät fliegt, zugewandt ist. Die obere Begrenzungsfläche ist dann entsprechend die dem Boden oder Untergrund abgewandte Fläche. Der Peripheriebereich ist insbesondere derjenige Bereich, der vom Zentrum des Antriebsmoduls aus gesehen "am Rande" liegt. Der Peripheriebereich begrenzt dabei das Antriebsmodul nach außen. Der Peripheriebereich kann insoweit auch als der äußere Randbereich des Antriebsmoduls verstanden werden. Die Erfindung ist nicht auf bestimmte Verläufe und Ausgestaltungen der unteren und oberen Begrenzungsfläche beschränkt., so dass das Antriebsmodul., und damit auch das Fluggerät, unterschiedliche Ausgestaltungen haben kann.

Gemäß einer Ausführungsform ist das Nutzlastmodul innerhalb der Grenzen des Peripheriebereichs bereitgestellt. In diesem Fall ist das Nutzlastmodul beispielsweise innenliegend, und das Antriebsmodul ist dazu außenliegend.

Gemäß einer Ausführungsform weist das Antriebsmodul einen Frachtraum auf. In einem solchen Fall kann beispielsweise auf einen Frachtraum in Nutzlastmodul verzichtet werden. Oder das Nutzlastmodul weist zusätzlich auch noch einen Frachtraum auf. Gemäß einer anderen Ausführungsform weist das Fluggerät zusätzlich zum Nutzlastmodul und zum Antriebsmodul ein eigenständiges Frachtmodul auf, welches insbesondere innerhalb des Antriebsmoduls bereitgestellt ist. In einem solchen Fall befindet sich der Frachtraum oder das Frachtmodul in dem Antriebsmodul, insbesondere getrennt vom Nutzlastmodul. In einem solchen Fall kann beispielsweise realisiert sein, dass sich dieser Frachtraum oder das Frachtmodul zusammen mit dem Antriebsmodul um das stationäre Nutzlastmodul bis zur gewünschten Flugrichtung dreht.

Der Antrieb des Fluggeräts in die verschiedenen Flugrichtungen erfolgt über geeignete Triebwerkeinrichtungen. Nachfolgend werden verschiedene Typen von Triebwerkeinrichtungen beschrieben. Diese werden zu Unterscheidungszwecken beziffert. So kann das Fluggerät erste Triebwerkeinrichtungen und dazu unterschiedliche zweite Triebwerkeinrichtungen aufweisen. Die ersten und zweiten Triebwerkeinrichtungen unterscheiden sich insbesondere hinsichtlich ihrer Ausgestaltung, ihrer Anordnung am Fluggerät und/oder ihrer Funktion.

Das Antriebsmodul weist wenigstens eine, vorzugsweise zwei oder mehr, erste Triebwerkeinrichtung(en) auf. Die Erfindung ist weder auf eine bestimmte Anzahl von ersten Triebwerkeinrichtungen, noch auf eine bestimmte Anordnungsposition am Antriebsmodul beschränkt. Grundsätzlich für die Erfindung ausreichend ist es, wenn das Antriebsmodul eine einzige erste Triebwerkeinrichtung aufweist. Bevorzugt sind jedoch mehr als eine erste Triebwerkeinrichtung bereitgestellt, beispielsweise zwei erste Triebwerkeinrichtungen. Es können auch mehr als zwei erste Triebwerkeinrichtungen bereitgestellt sein, beispielsweise vier oder sechs erste Triebwerkeinrichtungen. In einer Ausführungsform weist das Antriebsmodul eine gerade Anzahl von ersten Triebwerkeinrichtungen auf. In einer anderen Ausführungsform weist das Antriebsmodul eine ungerade Anzahl von ersten Triebwerkeinrichtungen auf. Die Anzahl der ersten Triebwerkeinrichtungen hängt insbesondere von der Größe und dem Gewicht des Fluggeräts ab. Für die Ausführbarkeit der Erfindung ist es ausreichend, wenn das Fluggerät nur über erste Treibwerkeinrichtungen verfügt.

Beispielsweise kann wenigstens eine erste Triebwerkeinrichtung an der oberen Begrenzungsfläche des Antriebsmoduls bereitgestellt sein. Beispielsweise kann wenigstens eine erste Triebwerkeinrichtung an der unteren Begrenzungsfläche des Antriebsmoduls bereitgestellt sein. Beispielsweise kann wenigstens eine erste Triebwerkeinrichtung im Peripheriebereich des Antriebsmoduls, beispielsweise am Rand des Antriebsmoduls von diesem nach außen abragend, bereitgestellt sein. Es sind auch beliebige Kombinationen von Anordnungsvarianten denkbar und möglich.

Die ersten Triebwerkeinrichtungen sind insbesondere konfiguriert zur Erzeugung einer Vorwärtsbewegung und/oder einer Schrägflugbewegung. Zusätzlich können die ersten Triebwerkeinrichtungen auch zur Erzeugung einer Aufwärtsbewegung und einer Abwärtsbewegung bereitgestellt sein. Die gewünschte Flugbewegung kann entweder über den von der ersten Triebwerkeinrichtung bereitgestellten Schub, und/oder durch eine entsprechende Stellung oder Ausrichtung der ersten Triebwerkeinrichtung in Bezug auf das Fluggerät erzielt werden.

Die wenigstens eine erste Triebwerkeinrichtung kann gemäß einer Ausführungsform starr und/oder drehbar und/oder kippbar am Antriebsmodul, insbesondere an der unteren Begrenzungsfläche und/oder an der oberen Begrenzungsfläche des Antriebsmoduls, bereitgestellt sein. Nachfolgend wird die erste Triebwerkeinrichtung in größerem Detail erläutert.

Die ersten Triebwerkeinrichtungen dienen insbesondere dazu, die Vorwärtsbewegung und/oder eine Schrägbewegung des Fluggeräts zu übernehmen. Sie können zusätzlich auch eine Flugbewegung in axialer Richtung übernehmen, etwa wenn das Fluggerät seinen Startvorgang abgeschlossen hat, was bevorzugt über die weiter unten beschriebenen zweiten Triebwerkeinrichtungen erfolgt.

Die Funktion der ersten Triebwerkeinrichtung soll nun anhand eines Beispiels verdeutlicht werden. Nach Erreichen der Start-Endhöhe, bei der die ersten Triebwerkeinrichtungen vertikal geschwenkt sind, werden die ersten Triebwerkeinrichtungen waagrecht geschwenkt und die ersten Triebwerkeinrichtungen um die Mittelachse des Fluggeräts gedreht, bis die gewünschte Flugrichtung erreicht ist. Die ersten Triebwerkeinrichtungen führen dann die Fortbewegung aus. Die Vorwärtsbewegung des Fluggeräts in die verschiedenen Richtungen erfolgt durch eine axiale Drehung des Antriebsmoduls um das vorzugsweise stationäre Nutzlastmodul. Wenn sich das Cockpit im Antriebsmodul befindet, dreht sich dieses entsprechend mit, so dass das Cockpit immer in Flugrichtung ausgerichtet ist. Die weiteren Flugbewegungen, wie beispielsweise die Kippbewegung und die Vorwärtsbewegung übernehmen die ersten Triebwerkeinrichtungen. Die Vorwärtsbewegung erfolgt durch eine axiale Drehung und der Schrägflug durch Kippen der ersten Triebwerkeinrichtungen. Während einer solchen Drehung und eines solchen Kippens rotiert das Antriebsmodul vorzugsweise nicht um das Nutzlastmodul. Die ersten Triebwerkeinrichtung können derart konfiguriert sein, dass sie mit unterschiedlichen, beispielsweise mit variablen, Schubkräften arbeiten. Die axiale Drehung der ersten Triebwerkeinrichtung erfolgt gemäß einer Ausführungsform um eine Achse, die parallel zur Mittelachse des Fluggeräts verläuft. Die Rotation erfolgt beispielsweise über ein Getriebe.

Die Erfindung ist nicht auf bestimmte Typen von ersten Triebwerkeinrichtungen beschränkt. Gemäß einer Ausführungsform ist die erste Triebwerkeinrichtung ein Turbofantriebwerk. Turbofantriebwerke an sich sind im Stand der Technik bekannt und den Fachleuten geläufig. Bei einem Turbofantriebwerk wird der Luftstrom aufgeteilt. Nur ein kleiner Teil der Luft gelangt über Verdichterschaufeln in die Brennkammer und Turbinen, um damit den Fan anzutreiben. Der Großteil der Luft wird direkt vom Fan verdichtet und erzeugt in einer eigenen Düse mit geringer Beschleunigung den Hauptanteil des Schubes. Das Turbofangetriebe kann mittels eines Kraftstoffs, etwa Wasserstroff, betrieben werden, welcher aus einer entsprechenden Energiequelle zugeführt wird. Alle Bauteile sind am/im Antriebsmodul bereitgestellt.

Gemäß einer anderen Ausführungsform kann die erste Triebwerkeinrichtung in Form einer Propfan-Triebwerkeinrichtung ausgebildet sein. Hierbei handelt es sich um eine Hybridform aus einem Turbofan- und einem Turboprop-Triebwerk. Die Propfan-Triebwerkeinrichtung kombiniert die hohe Fluggeschwindigkeit eines Strahltriebwerks mit der extremen Treibstoffeffizienz eines Propellerantriebs. An dem Antriebsmodul können Triebwerke mit Fan- Durchmessern von 10,0 m und mehr problemlos angebracht werden.

Gemäß einer Ausführungsform ist wenigstens eine erste Triebwerkeinrichtung als ein Düsentriebwerk beziehungsweise als ein Propfan-Triebwerk ausgebildet. Ein Propeller ist in einem Düsenkörper integriert, wobei der Düsenkörper einen Düsenkern aufweist. Dadurch wird das Nebenstromverhältnis im Vergleich zu nur Propeller-Fluggeräten erhöht. Eine rechteckige Düsenaustrittsform kann die Flugeigenschaften verbessern. Nach unten und nach oben geformten Winglets können in Form einer Teil-Düse gestaltet sein, was zusätzlich zu Energieeinsparung führt.

Der Düsenkern kann gemäß einer Ausführungsform wie die Rumpfstruktur eines heutigen Flugzeuges aufgebaut sein. Dabei sollte der Düsenkern einen niedrigen cw- Wert aufweisen und vorteilhafterweise die Form eines schwimmenden Pinguins annehmen. Der freie Raum zwischen den Triebwerken kann zusätzlich mit einer Düse versehen werden.

In einem großen Düsenkern können gemäß einer Ausführungsform zusätzlich Passagiere, Nutzlast, Treibstoff usw. untergebracht werden, wie auch im Rumpf eines heutigen Flugzeuges.

Gemäß einer anderen Ausführungsform handelt es sich bei der ersten Triebwerkeinrichtung um ein elektrisch betriebenes Triebwerk. Elektrische Triebwerke sind leise, kostengünstig und können beispielsweise mit Wasserstoff betrieben werden.

Weiterhin weist das Antriebsmodul wenigstens eine, vorzugsweise zwei oder mehr zweite Triebwerkeinrichtung(en) auf, die insbesondere konfiguriert sind zur Erzeugung einer senkrechten Aufwärtsbewegung und/oder einer senkrechten Abwärtsbewegung. Die wenigstens eine zweite Triebwerkeinrichtung kann starr und/oder drehbar und/oder kippbar am Antriebsmodul, insbesondere im Peripheriebereich des Antriebsmoduls, bereitgestellt sein.

Gemäß einer Ausführungsform sind die ersten und zweiten Triebwerkeinrichtungen in Form konstruktiv unterschiedlicher Triebwerkeinrichtungen ausgebildet. Gemäß einer anderen Ausführungsform sind die Triebwerkeinrichtungen an sich identisch aufgebaut, unterscheiden sich aber hinsichtlich Ihrer Funktion. So ist es beispielsweise möglich, wie weiter oben bereits geschildert, dass auch die ersten Triebwerkeinrichtungen eine Aufwärtsbewegung und eine Abwärtsbewegung erzeugen können. Gemäß einer Ausführungsform kann das Fluggerät nur erste Triebwerkeinrichtungen aufweisen, wobei einige der Triebwerkeinrichtungen die Funktion der ersten Triebwerkeinrichtung übernehmen, sprich eine Vorwärtsbewegung und/oder eine Schrägflugbewegung erzeugen, während andere erste Triebwerkeinrichtungen die Funktion der zweiten Triebwerkeinrichtung übernehmen, sprich eine Aufwärtsbewegung und eine Abwärtsbewegung erzeugen.

Die Erfindung ist weder auf eine bestimmte Anzahl von zweiten Triebwerkeinrichtungen, noch auf eine bestimmte Anordnungsposition am Antriebsmodul beschränkt. Grundsätzlich für die Erfindung ausreichend ist es, wenn das Antriebsmodul eine einzige zweite Triebwerkeinrichtung aufweist. Bevorzugt sind jedoch mehr als eine zweite Triebwerkeinrichtung bereitgestellt, beispielsweise zwei zweite Triebwerkeinrichtungen. Es können auch mehr als zwei zweite Triebwerkeinrichtungen bereitgestellt sein, beispielsweise vier, sechs, acht oder zehn zweite Triebwerkeinrichtungen. Natürlich ist auch eine ungerade Anzahl von zweiten Triebwerkeinrichtungen möglich. Die Anzahl der zweiten Triebwerkeinrichtungen hängt insbesondere von der Größe und dem Gewicht des Fluggeräts ab. Gemäß einer Ausführungsform weist das Antriebsmodul eine Anzahl von zwei oder mehr zweiten Triebwerkeinrichtung auf, die gleichmäßig, das heißt äquidistant, im Peripheriebereich des Antriebsmoduls bereitgestellt sind.

Die zweiten Triebwerkeinrichtungen sind insbesondere konfiguriert, dass sie eine senkrechte Aufwärtsbewegung und eine senkrechte Landung des Fluggeräts ermöglichen. Damit sind keine Landebahnen für das Fluggerät mehr erforderlich. Das Fluggerät kann auf jedem geeigneten festen Untergrund landen. Bei dem Fluggerät handelt es sich damit um einen so genannten "Senkrechtstarter".

Die Erfindung ist nicht auf bestimmte Typen von zweiten Triebwerkeinrichtungen beschränkt. Gemäß einer Ausführungsform ist die zweite Triebwerkeinrichtung eine elektrisch betriebene Triebwerkeinrichtung, die eine senkrechte Aufwärtsbewegung und eine senkrechte Abwärtsbewegung ermöglicht. Die elektrische Energie für solch zweite Triebwerkeinrichtungen kann beispielsweise über wenigstens eine wie weiter oben beschriebene Brennstoffzelleneinrichtung erzeugt und bereitgestellt werden. Gemäß einer Ausführungsform sind die zweiten Triebwerkeinrichtungen konfiguriert, dass sie auch Kippbewegungen ausführen. Somit können die zweiten Triebwerkeinrichtungen auch die Funktionen eines herkömmliche Leitwerks ersetzen. Durch elektrische zweite Triebwerkeinrichtungen lässt sich eine erhebliche Geräuschreduzierung erzielen.

Weitere Triebwerks- und Energieversorgungskombinationen sind möglich, Die Triebwerkeinrichtungen können an beliebig geeigneten Positionen des Fluggeräts, beispielsweise am Antriebsmodul, gegebenenfalls auch am Nutzlastmodul, angebracht werden.

Gemäß einer Ausführungsform ist am Antriebsmodul, insbesondere im Peripheriebereich des Antriebsmoduls, beispielsweise am Bodenelement, eines oder mehrere bewegliche Klappenelemente bereitgestellt. Durch zusätzlich angebrachte Klappenelemente ergibt sich eine weitere Möglichkeit des Schrägfluges. Durch den erzeugten Auftrieb kann Energie einspart werden. Die Klappenelemente sind insbesondere im Peripheriebereich des Antriebsmoduls, und damit außen am Umfang des Fluggeräts, angeordnet. Die Klappenelemente können auch an einer oder mehreren Triebwerkeinrichtungen bereitgestellt sein.

Gemäß einer Ausführungsform ist am Antriebsmodul oder an wenigstens einer Triebwerkeinrichtung eines oder mehrere Flügelelemente angeordnet, das/die vom Antriebsmodul nach außen abragt/abragen. angeordnet ist/sind. Beispielsweise kann das Flügelelement an dem Bodenelement angeordnet oder ausgebildet sein. Die Flügelelemente verbessern die Stabilität des Fluges während der Vorwärtsbewegung des Fluggeräts. Gemäß einer Ausführungsform ist wenigstens ein Flügelelement derart ausgebildet und am Antriebsmodul angeordnet oder ausgebildet, dass es einen Düseneffekt erzielt, wodurch der Schub erhöht werden kann. Im vorderen Bereich des Antriebsmoduls kann dann beispielsweise Luft mit einer ersten Geschwindigkeit eintreten und dann durch das Flügelelement und am Antriebsmodul vorbeiströmen. Hinter den Antriebsmodul tritt die Luft dann mit einer zweiten Geschwindigkeit aus, die bevorzugt größer ist als die erste Geschwindigkeit der Luft am Eintritt. In einem solchen Fall ist das Flügelelement beispielsweise in Form einer Düse ausgebildet, wobei sich das Antriebsmodul und das Nutzlastmodul innerhalb des düsenförmigen Flügelelements bereitgestellt sind. Eine derartige düsenförmige Komponente ist grundsätzlich auch für andere Anwendungen denkbar. Bei Bedarf können an dem Antriebsmodul beliebige Flügel- Formen angebracht werden.

Gemäß einer Ausführungsform ist am Antriebsmodul ein Fahrwerk für das Fluggerät angeordnet oder ausgebildet. Das Fahrwerk kann Räder aufweisen, über die das Fluggerät am Boden manövriert werden kann. Wegen der Senkrechtstart-Funktion sind solche Räder jedoch nicht zwingend erforderlich. Das Fahrwerk kann auch in Form wenigstens einer Stütze, wenigstens einer Dämpfereinrichtung, oder dergleichen, ausgebildet sein Das Fahrwerk ist vorzugsweise derart ausgebildet, dass es während des Fluges eingefahren oder eingeklappt werden kann, insbesondere in das Antriebsmodul.

Gemäß einer Ausführungsform ist das Fluggerät schwimmfähig. In einem solchen Fall kann das Fahrwerk beispielsweise in Form wenigstens eines Schwimmkörpers ausgebildet sein. Oder auf das Fahrwerk kann ganz verzichtet werden, In diesem Fall bildet das Fluggerät selbst, beispielsweise das Antriebsmodul, den schwimmfähigen Rumpf des Fluggeräts.

Gemäß einer Ausführungsform weist das Nutzlastmodul wenigstens einen Eingangsbereich auf. Darüber können beispielsweise Flugpassagiere in das Nutzlastmodul gelangen, wenn dieses als eine Fluggastkabine ausgebildet ist. Oder aber es kann über dem Eingangsbereich Fracht in das Nutzlastmodul eingeladen und aus diesem ausgeladen werden. Beispielsweise kann wenigstens ein Eingangsbereich seitlich und/oder unterhalb des Nutzlastmoduls bereitgestellt sein. Beispielsweise kann ein Einstieg von Flugpassagieren von unten, etwa über einen geeigneten Aufzug, oder seitlich, insbesondere radial seitlich, erfolgen, wobei auch die Bereitstellung von mehreren Notfalltüren gewahrt bleibt.

Gemäß einer Ausführungsform befinden sich mehrere Eingangsbereiche radial auf der Ebene des Nutzlastmoduls. Um einen Ein- und Ausstieg zu ermöglichen, kann beispielsweise eine Hebeeinrichtung, etwa eine Hydraulikeinrichtung, bereitgestellt sein, die das Nutzlastmodul, insbesondere in Richtung der Mittelachse, bewegt. Die Hebeeinrichtung kann im Antriebsmodul angeordnet sein. Auf diese Weise wird das Nutzlastmodul in Bezug auf das Antriebsmodul nach oben und über das Antriebsmodul hinaus geschoben und kann somit den Zugang über die Eintrittsbereiche ermöglichen, beispielsweise über eine oder mehrere Türen.

Zusammengefasst weist das erfindungsgemäße Fluggerät eine Reihe von Vorteilen auf:
- Es entstehen keine Schadstoffemissionen durch Verwendung von beispielweise Wasserstoff als Kraftstoff und elektrischem Strom.
- Es entstehen mehr Sitzplätze, mehr Stauraum und mehr Platz für die Energieversorgung. Batterien, Kerosin oder Wasserstoff, und dergleichen. Dadurch kann eine höhere Reichweite erzielt werden.

- Es sind keine Start- und Landebahnen mehr erforderlich durch einen senkrechten Start und eine senkrechte Landung. Das Fluggerät kann auf jedem geeigneten festen Untergrund landen
- Es können einfach zu fertigende Struktur- und Beplankungsteile verwendet werden. Für diese Bauteile benötigt man nur je ein Werkzeug und/oder eine Herstellungsvorrichtung. Dadurch wird das Fluggerät erheblich kostengünstiger.
- Fahrgast- und Frachtraum können von der Antriebseinheit getrennt sein. Sie können an unterschiedlichen Orten gefertigt werden.
- Verkürzte Fertigungsdurchlaufzeiten für den Bau des Fluggeräts sind möglich. Die Herstellung des Fluggeräts wird sicherer durch Reduzierung der Füge- und Klebepunkte. Längere Wartungsintervalle sind möglich.
- Eine optimale Gewichtsverteilung des Kraftstoffes und sonstiger Zuladung ist gegeben, durch symmetrische Platzierung eines Tanks oder einer Batterie, beispielsweise am Boden des Fluggeräts.
- Eine erhebliche Geräuschreduzierung wird erreicht durch eine senkrechte Auf- und Abwärtsbewegung durch elektrisch betriebene Triebwerke.

Gemäß dem zweiten Aspekt wird ein Verfahren zum Fliegen eines Fluggeräts bereitgestellt, welches die Merkmale des unabhängigen Patentanspruchs 14 aufweist. Das Fluggerät ist gemäß dem ersten Aspekt der Erfindung ausgebildet. Hinsichtlich der Funktionsweise des Verfahrens wird an dieser Stelle zur Vermeidung von Wiederholungen vollinhaltlich auch auf die Ausführungen zum ersten Aspekt der Erfindung, ebenso wie auf die allgemeine Beschreibung der Erfindung weiter oben, Bezug genommen und verwiesen.

Das Verfahren ist dadurch gekennzeichnet, dass über eine Rotationsbewegung des Nutzlastmoduls und des Antriebsmoduls relativ zueinander und/oder über eine Betätigung der Triebwerkeinrichtungen, das Fluggerät in eine gewünschte Flugrichtung gelenkt wird.

Gemäß einer Ausführungsform wird über eine Betätigung der wenigstens einen ersten Triebwerkeinrichtung eine Vorwärtsbewegung und/oder eine Schrägflugbewegung des Fluggeräts erzeugt. Je nach Ausgestaltung der ersten Triebwerkeinrichtung sowie deren Ausrichtbarkeit kann über die erste Triebwerkeinrichtung optional auch eine Aufwärtsbewegung und eine Abwärtsbewegung erzeugt werden.

Gemäß einer Ausführungsform wird über eine Betätigung der wenigstens einen zweiten Triebwerkeinrichtung eine senkrechte Aufwärtsbewegung und eine senkrechte Abwärtsbewegung des Fluggeräts erzeugt. Je nach Ausgestaltung der zweiten Triebwerkeinrichtung sowie deren Ausrichtbarkeit kann über die zweite Triebwerkeinrichtung optional auch Schrägbewegung erzeugt werden.

Die Erfindung wird nun anhand von Ausführungsbeispielen unter Bezugnahme auf die beiliegenden Zeichnungen näher erläutert. Es zeigen
- Figur 1: eine seitliche Ansicht auf eine erste Ausführungsform eines Fluggeräts gemäß der vorliegenden Erfindung;
- Figur 2: eine Draufsicht auf das Fluggerät gemäß Figur 1;
- Figur 3: eine seitliche Ansicht auf eine zweite Ausführungsform eines Fluggeräts gemäß der vorliegenden Erfindung;
- Figur 4: eine vergrößerte Darstellung einer ersten Triebwerkeinrichtung gemäß Ansicht X in Figur 1;
- Figur 5: die Komponenten einer Antriebseinrichtung für eine relative Rotationsbewegung zwischen dem Nutzlastmodul und dem Antriebsmodul;
- Figur 6: den räumlichen Unterschied zwischen einem herkömmlichen Flugzeug und dem Fluggerät gemäß der vorliegenden Erfindung;
- Figur 7: die Darstellung aus Figur 2 zur Verdeutlichung des Raumangebots zwischen einem herkömmlichen Flugzeug und dem Fluggerät gemäß der vorliegenden Erfindung;
- Figur 8: in schematischer Ansicht ein erstes Ausführungsbeispiel eines zusätzlichen Flügelelements mit Düseneffekt;
- Figur 9: das Flügelelement der Figur 8 in Anordnung am Fluggerät;
- Figur 10: in schematischer Ansicht ein zweites Ausführungsbeispiel eines zusätzlichen Flügelelements mit Düseneffekt;
- Figur 11: das Flügelelement der Figur 10 in Anordnung am Fluggerät;
- Figuren 12 und 13: eine weitere Ausführungsform eines Fluggeräts gemäß der vorliegenden Erfindung;
- Figuren 14 bis 16: noch eine weitere Ausführungsform eines Fluggeräts gemäß der vorliegenden Erfindung; und
- Figur 17: die Darstellung eines auf einem Untergrund geparkten Fluggeräts gemäß der vorliegenden Erfindung.

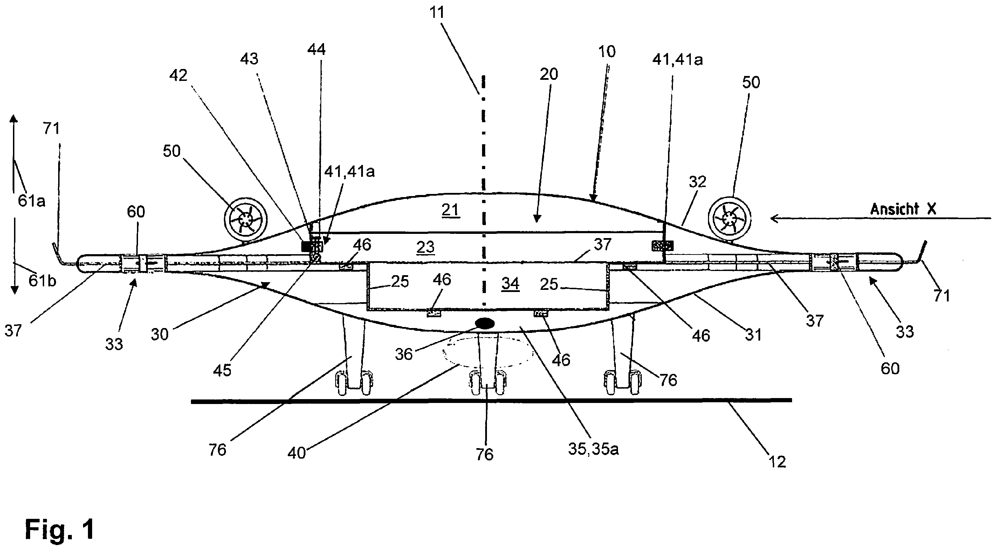

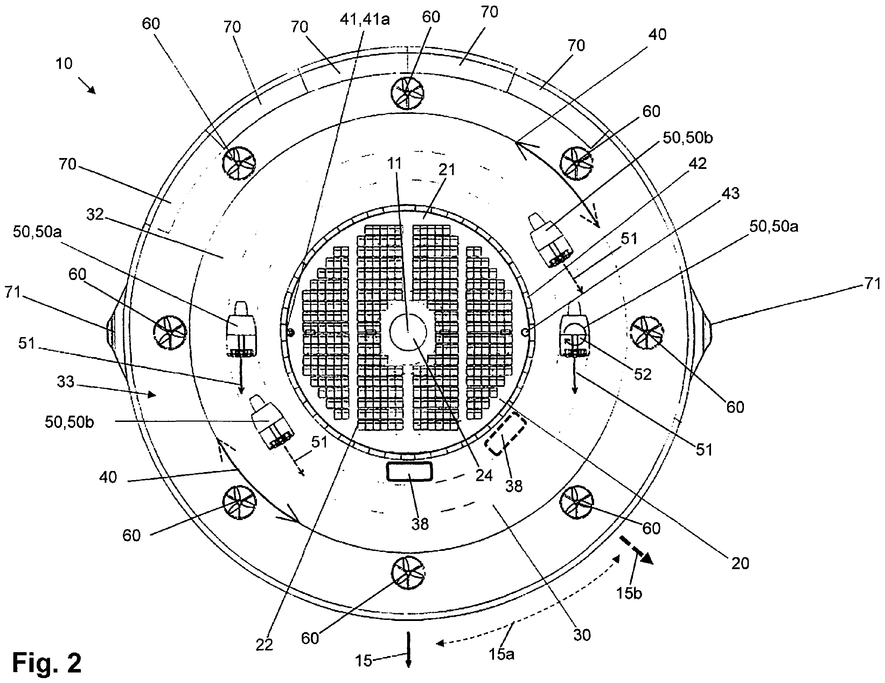

Anhand der Figuren 1 und 2 wird zunächst der grundsätzliche Aufbau des erfindungsgemäßen Fluggeräts 10 beschrieben. Das Fluggerät 10 ist rotationssymmetrisch um eine Mittelachse 11 aufgebaut.

Das Fluggerät 10 ist modulartig aufgebaut. Es besteht aus einem Nutzlastmodul 20 und einem Antriebsmodul 30. Ein Cockpit 38 des Fluggeräts 10 befindet sich im Antriebsmodul 30.

Das Nutzlastmodul 20 weist eine Fluggastkabine 21 mit einer Anzahl von Sitzen 22 und einen Frachtraum 23 auf. Je nach Ausgestaltung kann der Frachtraum 23 Bestandteil des Nutzlastmoduls 20 sein. Oder aber er ist in Form eines Frachtmoduls 34 bereitgestellt, welcher im Antriebsmodul 30 bereitgestellt ist. Natürlich kann auch sowohl im Nutzlastmodul 20 ein Frachtraum 23, als auch im Antriebsmodul 30 ein Frachtmodul 34 bereitgestellt sein. Erreicht werden kann die Fluggastkabine 21 über einen Eingangsbereich 24, der sich im gezeigten Beispiel im Boden des Nutzlastmoduls 20 befindet.

Das Antriebsmodul 30 beherbergt sämtliche Komponenten und Systeme, die zum Handhaben des Fluggeräts 10 erforderlich sind. Das Antriebsmodul 30 wird räumlich begrenzt durch eine untere Begrenzungsfläche 31, eine obere Begrenzungsfläche 32 und einen Peripheriebereich 33, die eine Art abgeschlossenes Gehäuse bilden. Im Antriebsmodul 30 kann sich ein weiteres Frachtmodul 34 befinden. Dies ist jedoch optional.

Im Antriebsmodul 30 ist ein Energieerzeugungssystem 35 bereitgestellt. Dieses umfasst diejenigen Komponenten, die zur Bereitstellung der Energie für die Handhabung des Fluggeräts 10 benötigt werden. Gezeigt ist im Ausführungsbeispiel der Figur 1 zur Veranschaulichungszwecken lediglich eine Energiequelle 35a in Form eines Tanks, in dem Wasserstoff für die Triebwerke gespeichert wird. Die Energiequelle 35a ist im Schwerpunkt 36 oder um den Schwerpunkt 36 herum des Antriebsmoduls 30 bereitgestellt, hier im Bereich der Mittelachse 11 des Fluggeräts 10.

Das Nutzlastmodul 20 und das Antriebsmodul 30 sind als voneinander getrennte Module bereitgestellt. Das bedeutet, das Antriebsmodul 30, welches die Antriebseinheit des Fluggeräts 10 beinhaltet, und das Nutzlastmodul 20, beispielsweise die Fluggastkabine 21, sind voneinander getrennt. Diese Trennung ist in Figur 1 durch die Bezugsziffer 25 dargestellt. Getrennt sind die beiden Module zudem über ein Bodenelement 37 in Form einer Bodenplattform.

Bei dem dargestellten Ausführungsbeispiel ist das Nutzlastmodul 20 stationär, während das Antriebsmodul 30 um das Nutzlastmodul 20 rotierbar ist. Durch die Rotation des Antriebsmoduls 30 wird die Flugrichtung 15 des Fluggeräts 10 eingestellt.

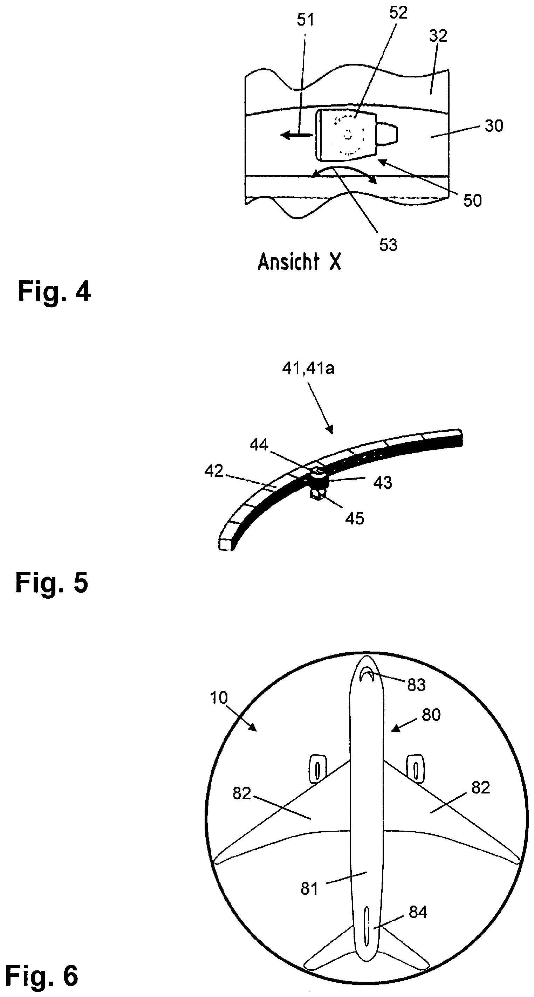

Damit das Nutzlastmodul 20 und das Antriebsmodul 30 relativ zueinander rotiert werden können, weist das Fluggerät 10 zur Erzeugung einer Rotationsbewegung 40 zwischen dem Nutzlastmodul 20 und dem Antriebsmodul 30 eine Antriebseinrichtung 41 auf, die im Detail auch in Figur 5 dargestellt ist. Die Antriebseinrichtung 41 ist eine Getriebeeinrichtung 41a. Die Getriebeeinrichtung 41a weist einen Innenzahnring 42, etwa in Form eines Hohlrads, auf, der sich an dem Antriebsmodul 30 befindet. Am Nutzlastmodul 20 befindet sich ein Zahnrad 43, das mit einem Antrieb 45, beispielsweise einem Elektromotor, betrieben werden kann. Der Elektromotor ist am/im Nutzlastmodul 20, beispielsweise am Bodenelement 37 befestigt und wird von einem Lagerbock 45 arretiert, der ebenfalls am/im Nutzlastmodul 20 befestigt wird. Zwischen dem Antriebsmodul 30 und dem Nutzlastmodul 20 sind Lagereinrichtungen 46 bereitgestellt, um die relative Rotationsbewegung zwischen dem Nutzlastmodul 20 und dem Antriebsmodul 30 zu vereinfachen, und um die Reibung während der Drehbewegung zu reduzieren.

Der Antrieb des Fluggeräts 10 in die verschiedenen Flugrichtungen erfolgt über geeignete Triebwerkeinrichtungen. Das Fluggerät 10 verfügt über zwei erste Triebwerkeinrichtungen 50 in Form von Turbofantriebwerken, die an der oberen Begrenzungsfläche 32 des Antriebsmoduls 30 angeordnet sind. Weiterhin verfügt das Fluggerät 10 über acht zweite Triebwerkeinrichtungen 60 in Form von elektrischen Triebwerken, die gleichmäßig beabstandet über den Peripheriebereich 33 des Antriebsmoduls 30 bereitgestellt sind.

Die ersten Triebwerkeinrichtungen 50 sind konfiguriert zur Erzeugung einer Vorwärtsbewegung 51 und/oder einer Schrägflugbewegung. Zusätzlich können die ersten Triebwerkeinrichtungen 50 auch zur Erzeugung einer Aufwärtsbewegung und einer Abwärtsbewegung bereitgestellt sein. Die ersten Triebwerkeinrichtungen 50 sind in einer Drehrichtung 52 drehbar und/oder in einer Kipprichtung 53 kippbar an der oberen Begrenzungsfläche 32 des Antriebsmoduls 30 bereitgestellt. Dies ist insbesondere auch in Figur 4 dargestellt. Durch eine Drehung des Antriebsmoduls 30 können die ersten Triebwerkeinrichtungen 50 zur Beeinflussung der Flugrichtung 15 des Fluggeräts zwischen einer ersten Triebwerkposition 50a und einer zweiten Triebwerkposition 50b gedreht werden.

Wie in Figur 2 dargestellt ist, fliegt das Fluggerät 10 in Flugrichtung 15, die zu Unterscheidungszwecken als erste Flugrichtung bezeichnet wird, wenn sich die ersten Triebwerkeinrichtungen 50 in der ersten Triebwerksposition 50a befinden. Das Cockpit 38 im Antriebsmodul 30 ist in der ersten Flugrichtung 15 ausgerichtet. Soll die Flugrichtung nun geändert werden, beispielsweise in eine zweite Flugrichtung 15b, wird das Antriebsmodul 30 über die Antriebseinrichtung 41 in Rotationsrichtung 40 gedreht, bis sich die ersten Triebwerkeinrichtungen 50 in der zweiten Triebwerksposition 50b befinden. Dadurch fliegt das Fluggerät 10 anschließend in die zweite Flugrichtung 15b. Das Cockpit 38 dreht sich entsprechend mit. Die bei der Änderung der Flugrichtung vorgenommene Drehbewegung ist in Figur 2 durch den Pfeil 15a dargestellt.

Die zweiten Triebwerkeinrichtungen 60 sind so konfiguriert, dass sie eine senkrechte Aufwärtsbewegung 61a und eine senkrechte Abwärtsbewegung 61b, sprich Landung, des Fluggeräts 10 ermöglichen. Damit sind keine Landebahnen für das Fluggerät 10 mehr erforderlich. Das Fluggerät 10 kann auf jedem geeigneten festen Untergrund landen.

Die acht zweiten Triebwerkeinrichtungen 60 und die zwei ersten Triebwerkeinrichtungen 50 sind an dem Antriebsmodul 30 befestigt. Nach Erreichen der Start-Endhöhe werden die ersten Triebwerkeinrichtungen 50 in Drehrichtung 52 gedreht und in Kipprichtung 53 gekippt (siehe Figur 4), bis die gewünschte Vorwärtsbewegung 51 erreicht ist. Die ersten Triebwerkeinrichtungen 50 führen dann die Fortbewegung in Flugrichtung 15 aus.

Die ersten Triebwerkeinrichtungen 50 arbeiten mit unterschiedlichen Schubkräften, wobei die zweiten Triebwerkeinrichtungen 60 das Fluggerät 10 in der Schwebe halten, was ebenfalls zu einer axialen Drehbewegung des Fluggeräts 10 um die Mittelachse 11 führt, bis die gewünschte Flugrichtung 15 erreicht ist. Danach haben die ersten Triebwerkeinrichtungen 50 wieder die gleichen Schubkräfte wodurch sich die Vorwärtsbewegung 15 ergibt. Das Antriebsmodul 30 und das Nutzlastmodul 20 sind dabei eine Einheit, d.h. sie sind nicht voneinander getrennt.

Durch zusätzlich angebrachte Klappenelemente 70 im Peripheriebereich 33 des Antriebsmoduls 30 ergibt sich eine weitere Möglichkeit des Schrägfluges. Durch den erzeugten Auftrieb kann Energie einspart werden. Weiterhin sind zwei Flügelelemente 71 vorgesehen, die vom Antriebsmodul 30 nach außen abragen und die die Stabilität des Fluges während der Vorwärtsbewegung des Fluggeräts 10 verbessern. Das Fluggerät 10 verfügt zusätzlich noch über ein Fahrwerk 72.

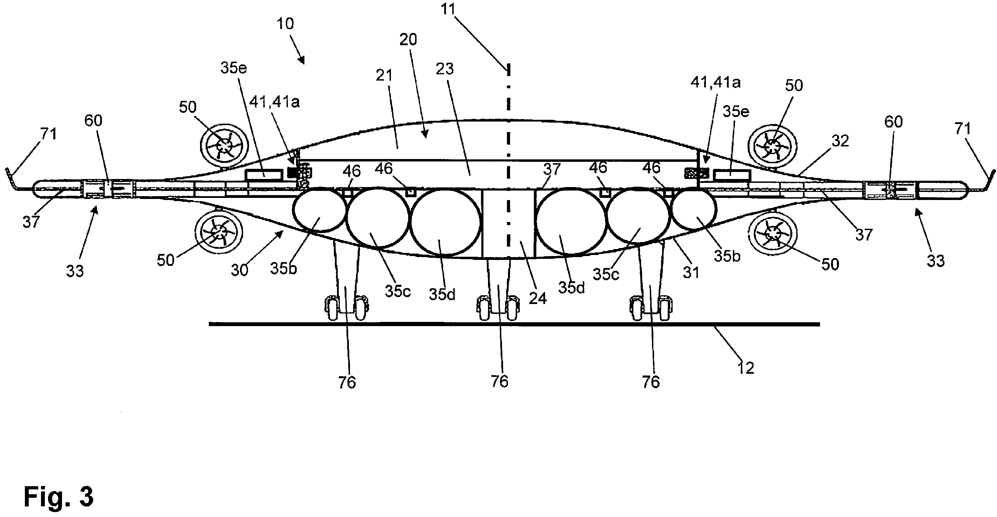

Figur 3 zeigt eine weitere Ausführungsform eines erfindungsgemäßen Fluggeräts 10. Der Grundaufbau des Fluggeräts 10 entspricht im Wesentlichen dem Grundaufbau des in Figur1 dargestellten Fluggeräts 10. Aus diesem Grund sind gleiche Bauteile mit identischen Bezugszeichen versehen. Zur Vermeidung von Wiederholungen wird an dieser Stelle auf die entsprechenden Ausführungen zum Ausführungsbeispiel in Figur 1 Bezug genommen und verwiesen. Im Folgenden werden deshalb nur die Unterschiede beschrieben.

Im Unterschied zu Figur 1 sind beim Fluggerät 10 der Figur 3 vier erste Triebwerkeinrichtungen 50 vorgesehen. Zwei erste Triebwerkeinrichtungen 50 sind an der oberen Begrenzungsfläche 32 des Antriebsmoduls 30 angeordnet. Zwei weitere erste Triebwerkeinrichtungen 50 sind an der unteren Begrenzungsfläche 31 des Antriebsmoduls 30 angeordnet. Weiterhin weist das Energieerzeugungssystem hier insgesamt drei ringförmig oder ringsegmentförmig ausgebildete Energiequellen 35b, 35c, 35d auf, bei denen es sich jeweils um Tanks zur Aufnahme von Wasserstriff handelt.

Die Energiequellen 35b, 35c, 35d sind allesamt im Antriebsmodul 30 bereitgestellt und um die Mittelachse 11 des Fluggeräts 10 herum angeordnet. Getrennt ist das Antriebsmodul 30 vom Nutzlastmodul 20 über das Bodenelement 37 in Form einer Bodenplattform. Das Nutzlastmodul 20, bestehend aus Fluggastkabine 21 und Frachtraum 23, befindet sich oberhalb des Bodenelements 37, während sich das Antriebsmodul 30 unterhalb des Bodenelements 37 befindet. Der Zugang zum Nutzlastmodul 20 erfolgt von unten über einen durch das Antriebsmodul 30 hindurchgeführten Eingangsbereich 24. Zur Erzeugung von elektrischer Energie aus Wasserstoff weist das Antriebsmodul 30 zwei Brennstoffzelleneinrichtungen 35e auf.

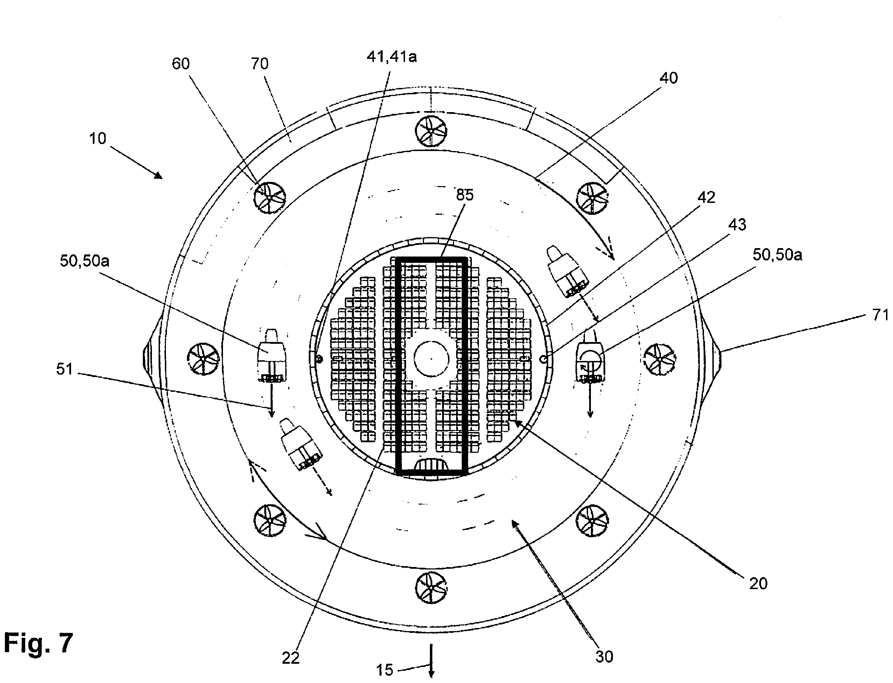

In Figur 6 ist der räumliche Unterschied zwischen einem herkömmlichen Flugzeug und dem erfindungsgemäßen Fluggerät skizziert. Heute bekannte herkömmliche Flugzeuge 80 sind der Anatomie eines Vogels nachempfunden. Sie bestehen aus einem langgestreckten Rumpf 81, dessen Länge um ein Vielfaches größer ist als dessen Breite, zumindest einem, in der Regel zwei Tragflächen 82, und einem Heck 84. Das Cockpit 83 befindet sich im vorderen Bereich des Rumpfs 80. Wie man anhand des durch einen Kreis dargestellten erfindungsgemäßen Fluggeräts 10 sieht, weist dieses im Bereich der größten Ausdehnung des herkömmlichen Flugzeugs 80 wesentlich mehr Platz auf, der, insbesondere auch für Flugpassagiere, genutzt werden kann. Dies ist auch in Figur 7 verdeutlicht. Figur 7 entspricht der Darstellung aus Figur 2. Zusätzlich eingezeichnet ist der Raum 85, der in einem herkömmlichen Flugzeug für Sitze zur Verfügung steht. Wie man sieht, können beim erfindungsgemäßen Fluggerät 10 wesentlich mehr Sitze 22 untergebracht werden.

Die Vorteile eines Fluggeräts 10 gemäß der vorliegenden Erfindung im Vergleich zu einem herkömmlichen Flugzeug, beispielsweise einem A380 (eingetragene Marke der Firma Airbus) der Firma Airbus, werden nachfolgend anhand einiger konkreter Zahlenwerte verdeutlicht. Ein solcher A380 hat eine Länge von 72,73m, eine Höhe von 24,10m und eine Spannwiete von 79,80m. Eine vergleichbares erfindungsgemäßes Fluggerät 10, welches rotationssymmetrisch aufgebaut ist, kann einen Durchmesser von etwa 60m aufweisen. Angetrieben wird ein A380 über vier Triebwerkeeinrichtungen, die mit Kerosin betrieben werden. Ein erfindungsgemäßen Fluggerät 10 kann mit zwei bis vier ersten Triebwerkeinrichtungen, etwa Turbofantriebwerken, die beispielsweise mit Wasserstroff betrieben werden, und sechs bis acht zweiten Triebwerkeinrichtungen, die elektrisch betrieben werden, ausgestattet sein. Während ein A380 ein Gewicht von 560t aufweist und etwa 500 Flugpassagiere befördern kann, weist ein erfindungsgemäßes Fluggerät 10 ein Gewicht von weniger als 400t auf und kann mehr als eintausend Flugpassagiere befördern. Um eine Reichweite von 12.400 km zu erzielen, weist der A380 ein Tankvolumen von 320.000l auf, in denen 250t Kerosin gelagert sind. Das erfindungsgemäße Fluggerät 10 bietet Platz für ein Tankvolumen von 1.280.000l, in dem bis zu 90t Wasserstoff gespeichert sind. Wegen des wesentlich leichteren Wasserstoffs im Vergleich zum Kerosin kann beim erfindungsgemäßen Fluggerät 10 sehr viel Gewicht eingespart werden. Wenn man den in den Tanks gespeicherten Wasserstroff komprimiert oder die Tanks vergrößert, können noch größere Mengen an Wasserstroff gespeichert werden, wodurch die Reichweite des erfindungsgemäßen Fluggeräts 10 im Vergleich zum herkömmlichen Flugzeug vergrößert werden kann, beispielsweise auf größer 20.000km.

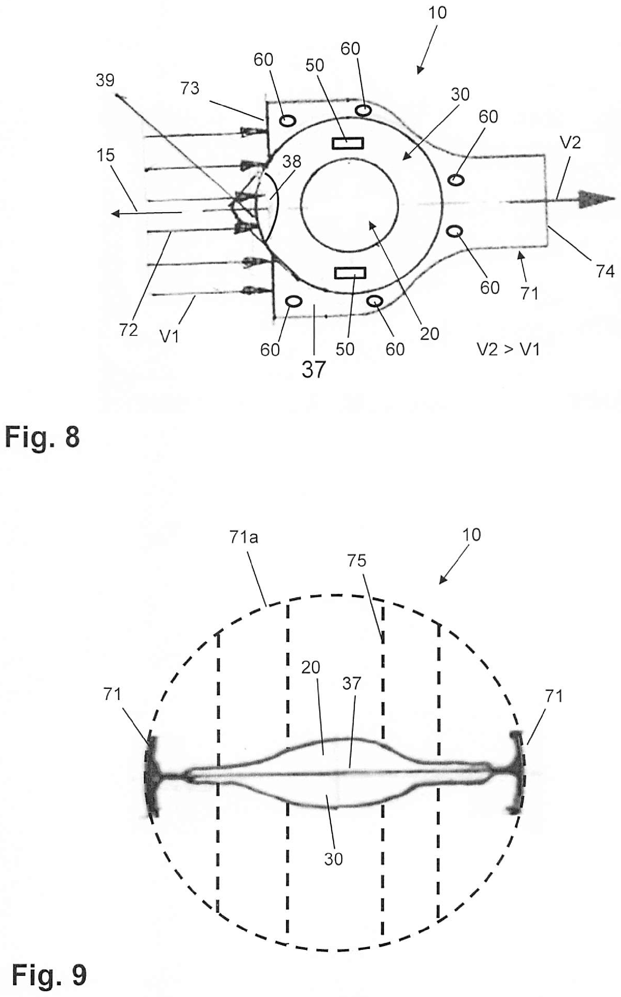

Figur 8 zeigt die Draufsicht auf ein erstes Ausführungsbeispiel eines Flügelelements 71, das eine Düsenfunktion aufweist. Das Flügelelement 71 ist am Antriebsmodul 30 des Fluggeräts 10 angeordnet, beispielsweise am Bodenelement 37, etwa einer Bodenplattform. Schematisch angedeutet sind die ersten Triebwerkeinrichtungen 50 und die zweiten Triebwerkeinrichtungen 60, ebenso wie das Cockpit 38 im Antriebsmodul 30. Das Flügelelement 71 ist in Form eines begrenzten Raums konzipiert, welcher in Strömungsrichtung 72 der Luft eine Eintrittsöffnung 73 im vorderen Bereich des Antriebsmoduls 30, und eine Austrittsöffnung 74 im hinteren Bereich des Antriebsmoduls 30 aufweist. Zur Verbesserung der Aerodynamik weist das Antriebsmodul 30 im Bereich der Eintrittsöffnung 73 einen spitz zulaufenden Frontbereich 39 beziehungsweise eine Nase auf. Während des Flugs strömt die Luft in Strömungsrichtung 72 mit einer ersten Geschwindigkeit V1 in die Eintrittsöffnung 73 des Flügelelements 71 ein, durchströmt das Flügelelement 71 außen am Antriebsmodul 30 und am Nutzlastmodul 20 vorbei und verlässt das Flügelelement 71 an der Austrittsöffnung 74 mit einer zweiten Geschwindigkeit V2, wobei die zweite Geschwindigkeit V2 größer ist als die erste Geschwindigkeit V1. Damit erzeugt das Flügelelement 71 eine zusätzliche Schubwirkung. Eine derart höhere Schubkraft kann beispielsweise die Geschwindigkeit des Fluggeräts 10 erhöhen. Zudem können Triebwerkeinrichtungen 50 mit geringerer Leistung verwendet werden, oder die Reichweite kann vergrößert werden, oder die Energiequelle, beispielsweise der Tankinhalt, kann verringert werden. All dies kann zu einer Gewichtsreduktion führen.

Figur 9 zeigt die Anordnung dieses Flügelelements 71 aus Figur 8 in Bezug auf das Nutzlastmodul 20 und das Antriebsmodul 30 des Fluggeräts 10, wobei das Flügelelement 71 beispielsweise an dem Bodenelement 37 angeordnet ist. Im Extremfall könnte sich das Flügelelement 71 kreisförmig um das Nutzlastmodul 20 und das Antriebsmodul 30 herum erstrecken. Dies ist durch den gestrichelt gezeichneten Kreis in Figur 9 verdeutlicht. Das Flügelelement 71 stellt somit ein Düsenelement 71a dar, in dessen Inneren sich das Nutzlastmodul 29 und das Antriebsmodul 30 befinden. Versteift wird diese Konstruktion durch Rippenelemente 75.

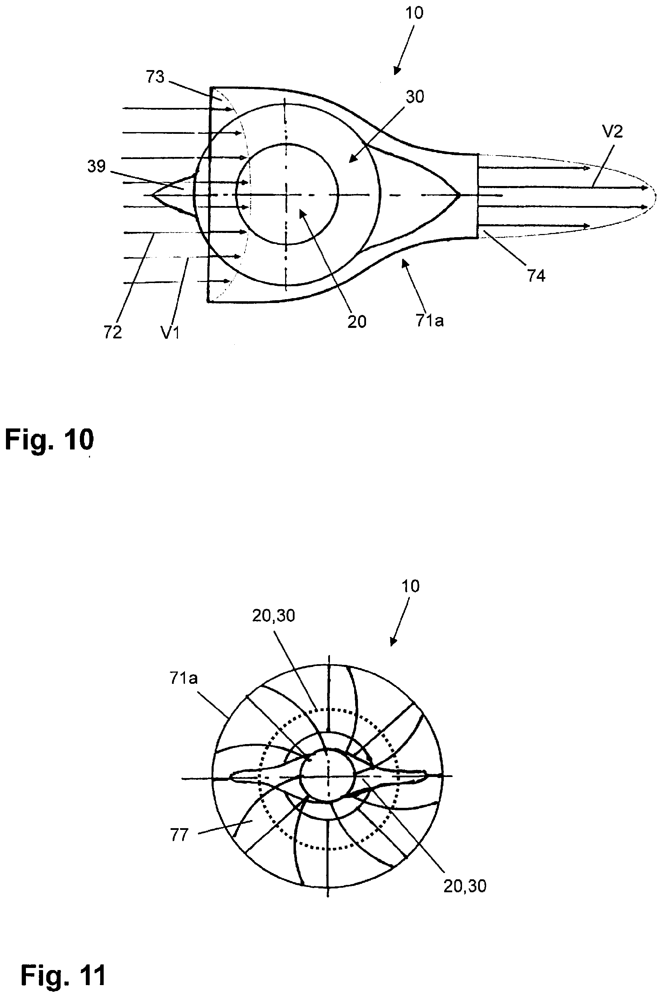

Figur 10 zeigt die Draufsicht auf ein weiteres Ausführungsbeispiel eines Fluggeräts 10, bestehend aus Antriebsmodul 30 und Nutzlastmodul 20, wobei außen am Antriebsmodul 30, beispielsweise an einer Bodenplattform, ein Flügelelement in Form eines Düsenelements 71a bereitgestellt ist. Das Antriebsmodul 30 und das Nutzastmodul 20 befinden sich innerhalb des in Form einer Düse ausgebildeten Flügelelements 71a. Das Antriebsmodul 30 weist eine tropfenförmige oder annähernd tropfenförmige Kontur auf. Das Antriebsmodul 30 kann aber auch anders ausgebildet sein, beispielsweise kugelförmig oder annähernd kugelförmig. Während des Flugs strömt die Luft in Strömungsrichtung 72 mit einer ersten Geschwindigkeit V1 in die Eintrittsöffnung 73 des Flügelelements 71a ein, durchströmt das Flügelelement 71a außen am Antriebsmodul 30 und am Nutzlastmodul 20 vorbei und verlässt das Flügelelement 71a an der Austrittsöffnung 74 mit einer zweiten Geschwindigkeit V2, wobei die zweite Geschwindigkeit V2 größer ist als die erste Geschwindigkeit V1. Damit erzeugt das Flügelelement 71a eine zusätzliche Schubwirkung. Figur 11 zeigt die Anordnung dieses Flügelelements 71a aus Figur 10 in Bezug auf das Nutzlastmodul 20 und das Antriebsmodul 30 des Fluggeräts 10, wobei im Bereich der Eintrittsöffnung 73 noch eine weitere Triebwerkeinrichtung 77, die insoweit eine dritte Triebwerkeinrichtung darstellt, bereitgestellt ist. Mit einem gestrichelten Kreis ist eine Ausführung angedeutet, bei der das Antriebsmodul 30 kugelförmig ausgebildet ist, wobei sich das Nutzlastmodul 20 innerhalb des kugelförmigen Antriebsmoduls 30 befindet.

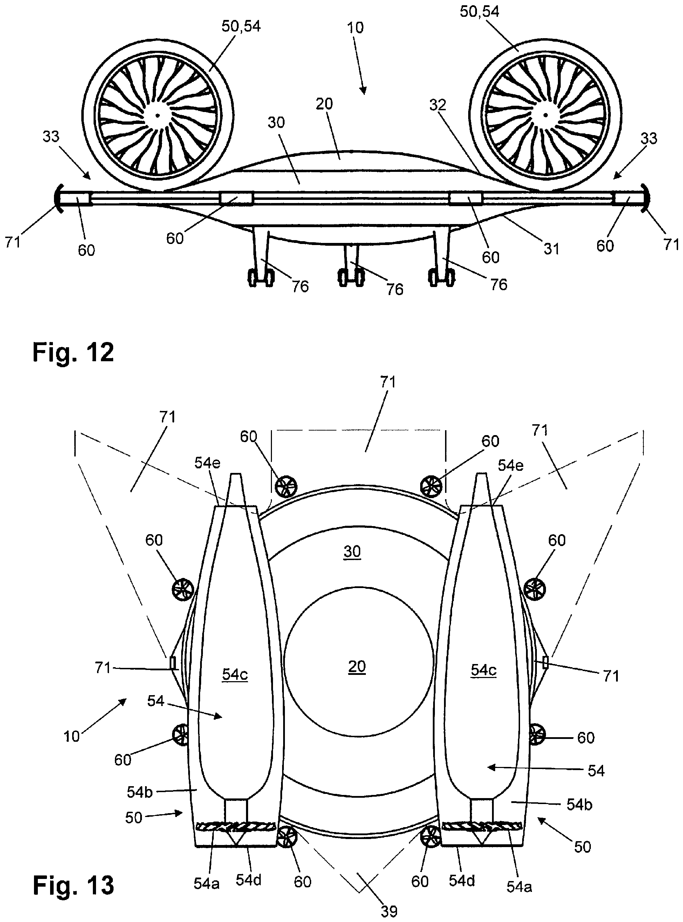

In den Figuren 12 und 13 ist ein weiteres Ausführungsbeispiel eines Fluggeräts 10 dargestellt. Der Grundaufbau des Fluggeräts 10 entspricht dabei dem Grundaufbau der zuvor beschriebenen Fluggeräte, so dass an dieser Stelle auch auf die entsprechenden Ausführungen zu den anderen Ausführungsformen vollinhaltlich Bezug genommen und verwiesen wird. Das Fluggerät 10 weist ein Nutzlastmodul 20 und ein Antriebsmodul 30 auf. Das Antriebsmodul 30 wird von einer unteren Begrenzungsfläche 31, einer oberen Begrenzungsfläche 32 und einem Peripheriebereich 33 begrenzt. Über ein Fahrwerk 76 stützt sich das Fluggerät 10 am Boden ab. Die Flugeigenschaften können optional über verschiedene zusätzliche Flügelelemente 71 sowie einen spitz zulaufenden Frontbereich 39 verbessert werden. Das Fluggerät 10 verfügt über eine Anzahl zweiter Triebwerkeinrichtungen 60 die zur Erzeugung einer Aufwärtsbewegung und einer Abwärtsbewegung bereitgestellt sind. Weiterhin sind zwei erste Triebwerkeinrichtungen 50 bereitgestellt, die eine Vorwärtsbewegung und eine Schrägflugbewegung erzeugen, und die an der oberen Begrenzungsfläche 32 des Antriebsmoduls 30 angeordnet sind.

Bei diesem Ausführungsbeispiel sind die ersten Triebwerkeinrichtungen 50 in Form von Düsentriebwerken 54, beispielsweise in Form von Propfan-Triebwerken ausgebildet. Die Triebwerke 54 verfügen über einen Düsenkörper 54b, an dessen Düseneintritt 54d ein Propeller 54a bereitgestellt ist. Weiterhin befindet sich im Düsenkörper 54b ein Düsenkern 54c. Dadurch wird das Nebenstromverhältnis im Vergleich zu nur Propeller-Fluggeräten erhöht. Eine rechteckige Form des Düsenaustritts 54e kann die Flugeigenschaften verbessern.

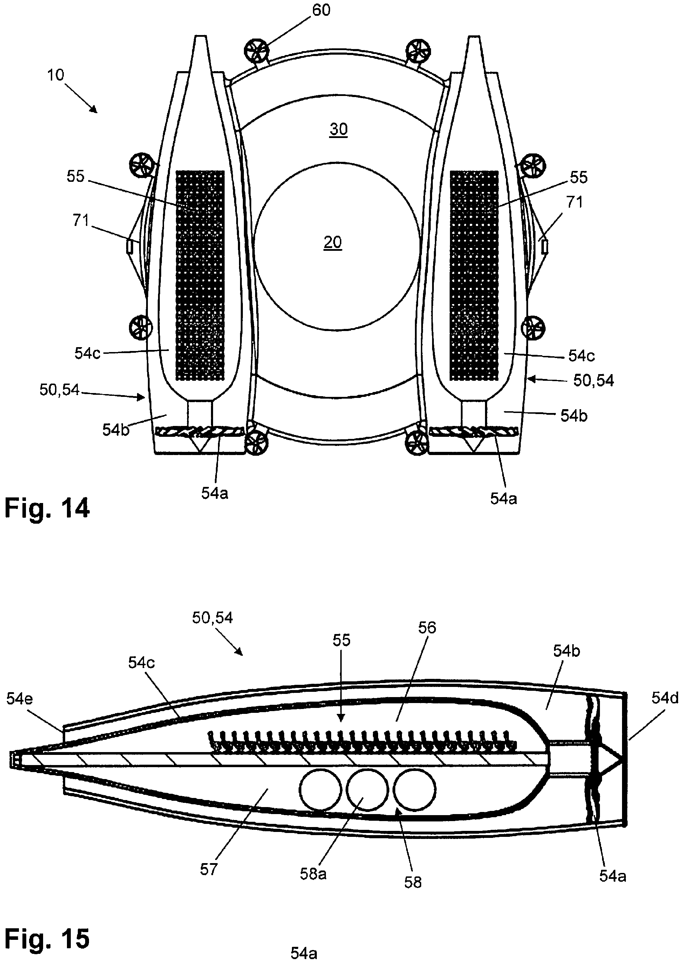

In den Figuren 14 bis 16 ist ein Ausführungsbeispiel eines Fluggeräts 0 dargestellt, das von seinem Grundaufbau dem in den Figuren 12 und 13 dargestellten Fluggerät 10 entspricht. so dass an dieser Stelle auch auf die entsprechenden Ausführungen zu dem Ausführungsbeispiel gemäß den Figuren 12 und 13 sowie zu den anderen Ausführungsformen vollinhaltlich Bezug genommen und verwiesen wird. Im Unterschied zum Ausführungsbeispiel der Figuren 12 und 13 ist bei dem Ausführungsbeispiel der Figuren 14 bis 16 die erste Triebwerkeinrichtung 50, die ebenfalls als Düsentriebwerken 54, beispielsweise in Form von Propfan-Triebwerken ausgebildet ist, anders aufgebaut.

Das Düsentriebwerk 54 verfügt wiederum über einen Düsenkörper 54b, an dessen Düseneintritt 54d ein Propeller 54a bereitgestellt ist. Weiterhin befindet sich im Düsenkörper 54b ein Düsenkern 54c. Eine rechteckige Form des Düsenaustritts 54e kann die Flugeigenschaften verbessern.

Der Düsenkern 54c ist wie die Rumpfstruktur eines heutigen Flugzeuges aufgebaut. Der Düsenkern 54c ist in Form eines Nutzlastmoduls 55 bereitgestellt, welches zum einen eine Fahrgastkabine 56 und zum anderen ein Frachtmodul 57 aufweist. In dem Frachtmodul 57 ist ein Energieerzeugungssystem 58 mit wenigstens einer Energiequelle 58a bereitgestellt. Im großen Düsenkern 54c können somit zusätzlich Passagiere, Nutzlast, Treibstoff usw. untergebracht werden, wie auch im Rumpf eines heutigen Flugzeuges.

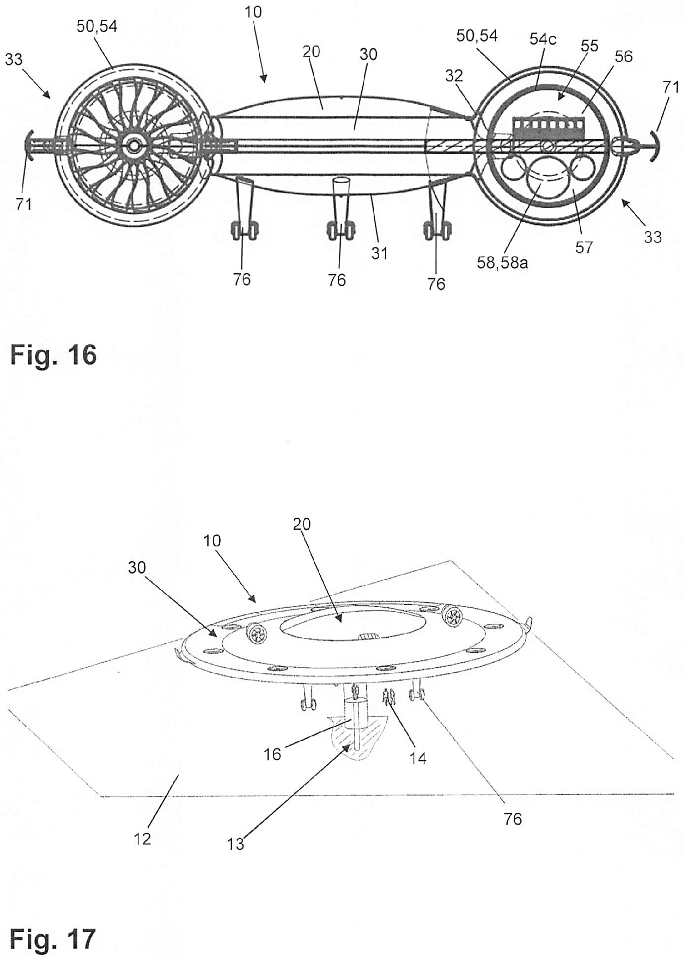

In Figur 17 ist ein erfindungsgemäßes Fluggerät 10 dargestellt, welches über sein Fahrwerk 76 auf dem Boden 12 beziehungsweise Untergrund eines Flughafens abgestellt ist. Über einen Fahrstuhl 13 erreichen die Fluggäste 14 den, beispielsweise in Figur 2 dargestellten, Eingangsbereich 25 zum Nutzlastmodul 20 von unten. Über eine Kolbeneinrichtung 16 wird der Fahrstuhl nach oben bewegt. Zusätzliche Notfalltüren können im Nutzlastmodul 20, beispielsweise seitlich, bereitgestellt sein.

Gemäß einer anderen Ausführungsform kann der wenigstens eine Eingangsbereich 25 seitlich im Nutzlastmodul 20 bereitgestellt sein. In einem solchen Fall könnte eine entsprechende Kolbeneinrichtung in der Mitte der des Antriebsmoduls angebracht sein. Die Kolbeneinrichtung schiebt dann bei Betätigung das Nutlastmodul 210 nach oben und über die Begrenzung des Antriebsmoduls 30 hinaus, wodurch der Zugang radial ermöglicht wird, beispielsweise über eine oder mehrere Türen.

### Bezugszeichenliste

- 10: Fluggerät (Rotationssymmetrisches Fluggerät)
- 11: Mittelachse
- 12: Boden (Untergrund)
- 13: Fahrstuhl
- 14: Fluggast
- 15: Flugrichtung des Fluggeräts (Erste Flugrichtung)
- 15a: Drehbewegung
- 15b: Flugrichtung des Fluggeräts (Zweite Flugrichtung)
- 16: Kolbeneinrichtung

- 20: Nutzlastmodul
- 21: Fluggastkabine
- 22: Sitze
- 23: Frachtraum
- 24: Eingangsbereich
- 25: Trennung zwischen Nutzlastmodul und Antriebsmodul

- 30: Antriebsmodul
- 31: Untere Begrenzungsfläche
- 32: Obere Begrenzungsfläche
- 33: Peripheriebereich
- 34: Frachtmodul
- 35: Energieerzeugungssystem
- 35a: Energiequelle (Tank)
- 35b: Energiequelle (Tank)
- 35c: Energiequelle (Tank)
- 35d: Energiequelle (Tank)
- 35e: Brennstoffzelleneinrichtung
- 36: Schwerpunkt des Antriebsmoduls
- 37: Bodenelement (Bodenplattform)
- 38: Cockpit
- 39: Spitz zulaufender Frontbereich (Nase)

- 40: Rotationsbewegung zwischen Nutzlastmodul und Antriebsmodul
- 41: Antriebseinrichtung
- 41a: Getriebeeinrichtung
- 42: Innenzahnring (Hohlrad)
- 43: Zahnrad
- 44: Lagerbock
- 45: Antrieb (E-Motor)
- 46: Lagereinrichtung

- 50: Erste Triebwerkeinrichtung (Turbofantriebwerk)
- 50a: Erste Triebwerksposition
- 50b: Zweite Triebwerksposition
- 51: Vorwärtsbewegung
- 52: Drehrichtung
- 53: Kipprichtung
- 54: Erste Triebwerkeinrichtung (Düsentriebwerk)
- 54a: Propeller
- 54b: Düsenkörper
- 54c: Düsenkern
- 54d: Düseneintritt
- 54e: Düsenaustritt
- 55: Nutzlastmodul
- 56: Fahrgastkabine
- 57: Frachtmodul
- 58: Energieerzeugungssystem
- 58a: Energiequelle

- 60: Zweite Triebwerkeinrichtung (Elektrisches Triebwerk)
- 61a: Aufwärtsbewegung
- 61b: Abwärtsbewegung

- 70: Klappenelement
- 71: Flügelelement
- 71a: Flügelelement (Düsenelement)
- 72: Luftströmungsrichtung
- 73: Eintrittsöffnung
- 74: Austrittsöffnung
- 75: Rippenelement
- 76: Fahrwerk
- 77: Triebwerkeinrichtung (Dritte Triebwerkeinrichtung)

- 80: Herkömmliches Fluggerät (Flugzeug)
- 81: Rumpf
- 82: Tragfläche
- 83: Cockpit
- 84: Heck
- 85: Raum für Sitze

- V1: Luftgeschwindigkeit
- V2: Luftgeschwindigkeit

## Patentansprüche

1. Fluggerät (10) zum Transport von Personen und/oder Lasten, aufweisend ein Nutzlastmodul (20) und ein Antriebsmodul (30), wobei das Nutzlastmodul (20) und das Antriebsmodul (30) als voneinander getrennte Module bereitgestellt sind, welche zum Fluggerät (10) zusammengesetzt sind, wobei dass das Nutzlastmodul (20) und das Antriebsmodul (30) rotationsbeweglich (40) relativ zueinander angeordnet sind, wobei das Nutzlastmodul (20) und das Antriebsmodul (30) insbesondere rotationssymmetrisch ausgebildet sind und wobei das Fluggerät (10) insbesondere rotationssymmetrisch ausgebildet ist, **dadurch gekennzeichnet, dass** das Nutzlastmodul (20) insbesondere stationär ist, dass das Antriebsmodul (30) um das Nutzlastmodul (20) insbesondere rotierbar ist, dass das Fluggerät (10) zur Erzeugung einer Rotationsbewegung (40) zwischen dem Nutzlastmodul (20) und dem Antriebsmodul (30) eine Antriebseinrichtung (41) aufweist. dass das Antriebsmodul (30) wenigstens eine, vorzugsweise zwei oder mehr erste Triebwerkeinrichtung(en) (50) aufweist, das/die zur Erzeugung einer Vorwärtsbewegung (51) und/oder einer Schrägflugbewegung konfiguriert ist/sind, und dass das Antriebsmodul (30) wenigstens eine, vorzugsweise zwei oder mehr zweite Triebwerkeinrichtung(en) (60) aufweist, das/die zur Erzeugung einer senkrechten Aufwärtsbewegung (61a) und/oder einer senkrechten Abwärtsbewegung (61b) konfiguriert ist/sind.

2. Fluggerät nach Anspruch 1, **dadurch gekennzeichnet, dass** zwischen dem Antriebsmodul (30) und dem Nutzlastmodul (20) wenigstens eine Lagereinrichtung (46) bereitgestellt ist, und dass die Lagereinrichtung (46) insbesondere ausgewählt ist aus der Gruppe bestehend aus Rollenlager, Luftlager, Magnetlager, oder Lager zur Verringerung der Reibung zwischen Nutzlastmodul (20) und Antriebsmodul (30).

3. Fluggerät nach einem der Ansprüche 1 oder 2, **dadurch gekennzeichnet, dass** das Nutzlastmodul (20) eine Fluggastkabine (21) und/oder einen Frachtraum (23) aufweist.

4. Fluggerät nach einem der Ansprüche 1 bis 3, **dadurch gekennzeichnet, dass** das Antriebsmodul (30) eine untere Begrenzungsfläche (31), eine obere Begrenzungsfläche (32) und einen das Antriebsmodul (30) seitlich begrenzenden Peripheriebereich (33) aufweist.

5. Fluggerät nach Anspruch 4, **dadurch gekennzeichnet, dass** das Nutzlastmodul (20) innerhalb der Grenzen des Peripheriebereichs (33) bereitgestellt ist.

6. Fluggerät nach einem der Ansprüche 1 bis 5, **dadurch gekennzeichnet, dass** das Antriebsmodul (30) einen Frachtraum aufweist, oder dass das Fluggerät (10) ein Frachtmodul (34) aufweist, welcher/welches innerhalb des Antriebsmoduls (30) bereitgestellt ist.

7. Fluggerät nach einem der Ansprüche 1 bis 6, **dadurch gekennzeichnet, dass** im Antriebsmodul (30) ein Energieerzeugungssystem (35) bereitgestellt ist.

8. Fluggerät nach Anspruch 7, **dadurch gekennzeichnet, dass** das Energieerzeugungssystem (35) wenigstens eine Energiequelle (35a, 35b, 35c, 35d) aufweist, die insbesondere im Schwerpunkt (36) oder um den Schwerpunkt (36) herum des Antriebsmoduls (30) bereitgestellt ist, und/oder die insbesondere um eine Mittelachse (11) herum des Fluggeräts (10) bereitgestellt ist.

9. Fluggerät nach einem der Ansprüche 1 bis 8, **dadurch gekennzeichnet, dass** die wenigstens eine erste Triebwerkeinrichtung (50) starr und/oder drehbar und/oder kippbar am Antriebsmodul (30), insbesondere an der unteren Begrenzungsfläche (31) und/oder an der oberen Begrenzungsfläche (32) des Antriebsmoduls (30), bereitgestellt ist.

10. Fluggerät nach einem der Ansprüche 1 bis 9, **dadurch gekennzeichnet, dass** die wenigstens eine zweite Triebwerkeinrichtung (60) starr und/oder drehbar und/oder kippbar am Antriebsmodul (30), insbesondere im Peripheriebereich (33) des Antriebsmoduls (30), bereitgestellt ist.

11. Fluggerät nach einem der Ansprüche 1 bis 10, **dadurch gekennzeichnet, dass** am Antriebsmodul (30), insbesondere im Peripheriebereich (33) des Antriebsmoduls (30), eines oder mehrere bewegliche Klappenelemente (70) und/oder eines oder mehrere Flügelelemente (71), die vom Antriebsmodul (30) nach außen abragen, angeordnet ist/sind.

12. Fluggerät nach einem der Ansprüche 1 bis 11, **dadurch gekennzeichnet, dass** am Antriebsmodul (30) ein Fahrwerk (72) für das Fluggerät (10) angeordnet oder ausgebildet ist.

13. Fluggerät nach einem der Ansprüche 1 bis 12, **dadurch gekennzeichnet, dass** das Nutzlastmodul (20) wenigstens einen Eingangsbereich (25) aufweist, und dass wenigstens ein Eingangsbereich (25) seitlich und/oder unterhalb des Nutzlastmoduls (20) bereitgestellt ist.

14. Verfahren zum Fliegen eines Fluggeräts (10) nach einem der Ansprüche 1 bis 13, **dadurch gekennzeichnet, dass** über eine Rotationsbewegung (40) des Nutzlastmoduls (20) und des Antriebsmoduls (30) relativ zueinander und/oder über eine Betätigung der Triebwerkeinrichtungen (50, 60) das Fluggerät (10) in eine gewünschte Flugrichtung (15) gelenkt wird.

15. Verfahren nach Anspruch 14, **dadurch gekennzeichnet, dass** über eine Betätigung der wenigstens einen ersten Triebwerkeinrichtung (50) eine Vorwärtsbewegung (51) und/oder eine Schrägflugbewegung des Fluggeräts (10) erzeugt wird, und/oder dass über eine Betätigung der wenigstens einen zweiten Triebwerkeinrichtung (60) eine senkrechte Aufwärtsbewegung (61a) und eine senkrechte Abwärtsbewegung (61b) des Fluggeräts (10) erzeugt wird.
